# EUROPÄISCHE PATENTSCHRIFT

(11) **EP 3 730 394 B1**
(45) Veröffentlichungstag und Bekanntmachung des Hinweises auf die Patenterteilung: **27.09.2023**
(21) Anmeldenummer: 20000131.1
(22) Anmeldetag: 25.03.2020
(51) Int. Cl.: B62M 9/122, B62M 9/125

(54) **ELEKTROMECHANISCHES SCHALTWERK ZUR KOAXIALEN MONTAGE**
ELECTROMECHANICAL DERAILLEUR FOR COAXIAL MOUNTING
DERAILLEUR ÉLECTROMÉCANIQUE DESTINÉ AU MONTAGE COAXIAL

(30) Priorität: 25.04.2019 DE 102019002956; 10.02.2020 DE 102020000827
(43) Veröffentlichungstag der Anmeldung: 28.10.2020
(60) Teilanmeldung: 23020384.6
(73) Patentinhaber: SRAM Deutschland GmbH, 97424 Schweinfurt (DE)
(72) Erfinder: Böhm, Robert, 97453 Schonungen-OT Mainberg (DE); Düweling, Sebastian, 88316 Isny (DE)

(56) Entgegenhaltungen:
- EP-A1- 1 010 612
- EP-A2- 3 388 324

## Beschreibung

Die Erfindung betrifft ein elektromechanisches Schaltwerk zur koaxialen Montage an einer Hinterradachse.

Üblicherweise werden hintere Schaltwerke am rechten Ausfallende des Rahmens mit Hilfe eines Schaltauges befestigt. Das Schaltauge wird dazu an einem Ende koaxial mit der Hinterradachse am Rahmen festgelegt und an einem anderen Ende koaxial mit der B-Achse des Basiselements (B-Knuckle) des Schaltwerks verbunden. Der Abstand zwischen der geometrischen Achse A der Hinterradachse und der B-Achse des Basiselements wird vom Schaltauge überbrückt. Das Basiselement ist im am Rahmen montierten Zustand relativ zum Schaltauge um die B-Achse drehbar. Die Verdrehung des Schaltwerks wird nach vorne - gegen den Uhrzeigersinn (UZS) - mittels der B-Schrauben begrenzt. Der Verdrehung des Schaltwerks nach hinten (im UZS) wirkt die Kettenspannung entgegen.

Schaltaugen unterscheiden sich je nach Hersteller und Anbringungsart stark voneinander. Sie können einteilig mit dem Rahmen ausgebildet sein oder als separates Bauteil vorliegen. Separate Schaltaugen werden entweder über Schnellspannachsen oder über Steckachsen am Rahmen geklemmt. Sowohl die Klemmung auf der Rahmenaußenseite, als auch auf der Rahmeninnenseite ist möglich. Das führt dazu, dass das Schaltwerk je nach verwendetem Schaltauge eine andere Position relativ zur Hinterradachse und auch zum Ritzelpaket einnimmt. Diese Positionsunterschiede in axialer als auch in radialer Richtung machen die Schaltwerksauslegung und dessen Montage kompliziert. Das Schaltwerk muss je nach Schaltauge neu eingestellt werden. Durch das zusätzliche Bauteil kommen Toleranzen hinzu, die sich negativ auf die Positionierungsgenauigkeit des Schaltwerks auswirken.

Außerdem sind Schaltaugen, gerade als separate Bauteile, schadensanfällig und instabil. Bei großen Ritzelpaketen und entsprechend großen Schaltwerksdimensionen treten erhöhte Hebelkräfte auf, die vom Schaltauge nur ungenügend aufgenommen werden können. Darüber hinaus wirken sich die vergrößerten Schaltwerksdimensionen mit den verlängerten Hebelverhältnissen zusätzlich negativ auf die Positionierungsgenauigkeit des Schaltwerks aus. Im Konflikt dazu steht, dass gerade eine erhöhte Anzahl von eng nebeneinander angeordneten Ritzeln eine erhöhte Positionierungsgenauigkeit verlangt.

Mechanische Schaltwerke zur koaxialen Montage an der Hinterradachse sind aus der EP 0 875 444 A1, der EP 1 342 658 A1 und der EP 1 764 297 A1 bekannt. Das separate Schaltauge entfällt, die B-Achse des Basiselements verläuft entlang der Hinterradachse A, also koaxial. Ein gattungsgemäßes elektromechanisches Schaltwerk ist aus der EP 3 388 324 A2 bekannt.

Ein Nachteil der bekannten Schaltwerke ist die mangelnde Stabilität der Anordnung und die damit einhergehende mangelnde Präzision. Moderne Fahrradantriebe verfügen immer häufiger über ein elektronisch gesteuertes Schaltwerk und ein Ritzelpaket mit einer erhöhten Anzahl von elf, zwölf oder dreizehn Ritzeln mit teilweise großen Zahnsprüngen zwischen den benachbarten Ritzeln. Diese Ritzelpakete verfügen über eine Gangspreizung von 500 Prozent oder mehr. Solche Gangspreizungen können mit einem kleinsten Ritzel mit 9, 10 oder 11 Zähnen und einem größten Ritzel mit 50, 51, 52 Zähnen oder mehr erreicht werden.

Um die erhöhte Anzahl von Ritzeln mit dem Schaltwerk bedienen zu können, wird die Schaltwerksdimension vergrößert. Damit einhergehend steigen die auf das Schaltwerk wirkenden Hebelkräfte, so dass das Schaltwerk zum Verkippen gegenüber den Rotationsebenen der Ritzel neigt. Nur ein exakt vertikal unter dem Ritzelpaket stehendes Schaltwerk lässt sich präzise schalten.

Ein weiterer Nachteil ist die Abhängigkeit von Rahmentoleranzen. Da herkömmliche Schaltwerke direkt am Rahmen befestigt und gegenüber diesem referenziert sind, wirken sich Fertigungstoleranzen des Rahmens auch direkt auf das Schaltwerk aus. Darunter leiden die Positionierungsgenauigkeit und Einstellbarkeit des Schaltwerks.

Schräggestellte Schwenkmechanismen (Schrägparallelogramm) können Schläge in vertikaler Richtung, wie sie beim Fahren im Gelände auftreten, zu einer Bewegung des Schwenkmechanismus und damit zu ungewollten Schaltvorgängen (ghost shifting) führen. Um die stark unterschiedlich großen Ritzel anfahren zu können, müsste das Schrägparallelogramm noch schräger gestellt werden und/oder die Schaltwerksdimensionen weiter vergrößert werden. Beides würde die Anfälligkeit für ungewollte Schaltvorgänge weiter erhöhen.

Gerade bei elektromechanisch betriebenen Schaltwerken stellt sich die Aufgabe die genannten Nachteile zu überwinden. Diese Aufgabe wird durch ein elektromechanisches Schaltwerk gemäß den Ansprüchen gelöst.

Das erfindungsgemäße elektromechanische Schaltwerk ist zur koaxialen Montage an einer Hinterradachse A geeignet. Das Schaltwerk umfasst ein Basiselement (B-Knuckle), ein bewegliches Element (P-Knuckle), eine Kettenführungsanordnung, einen Schwenkmechanismus und einen elektromechanischen Antrieb. Das Basiselement ist zur lösbaren Montage am Fahrradrahmen ausgebildet. Insbesondere ist das Basiselement im fahrbereiten Zustand um die B-Achse drehfest gegenüber dem Fahrradrahmen festgelegt. Die Kettenführungsanordnung ist um eine Drehachse P (P-Achse) mit dem beweglichen Element drehbar verbunden. Der Schwenkmechanismus verbindet das Basiselement mit dem beweglichen Element, so dass das bewegliche Element relativ zum Basiselement beweglich ist. Der elektromechanische Antrieb ist zum Antreiben des Schwenkmechanismus ausgebildet. Das Basiselement umfasst ein erstes Anschlussende, welches entlang einer Montageachse (entspricht der B-Achse bzw. der Z-Achse) koaxial mit der Hinterradachse A montierbar ist, und ein zweites Anschlussende zur Kopplung mit dem Schwenkmechanismus. Im montierten Zustand verläuft die Montageachse des Basiselements (B-Achse bzw. Z-Achse) koaxial mit der Hinterradachse A.

Gemäß einer nicht beanspruchten Ausführung des Schaltwerks ist das erste Anschlussende des Basiselements drehfest mit dem Basiselement verbunden.

Insbesondere ist das erste Anschlussende einstückig mit dem Basiselement ausgebildet.

Aus dem Stand der Technik bekannte Anbindungen des Schaltwerks mittels Schaltauge, erlauben eine Drehbewegung des Basiselements relativ zum Schaltauge um die B-Achse.

Gemäß einer nicht beanspruchten Ausführungsform ist das Basiselement einstückig mit seinem ersten Anschlussende und seinem zweiten Anschlussende ausgebildet.

Gemäß einer nicht beanspruchten Ausführung des Schaltwerks weist das erste Anschlussende zumindest einen Arm mit einer Zentrieröffnung auf. Durch den Mittelpunkt der Zentrieröffnung verläuft die Z-Achse, welche der B-Achse des Schaltwerks entspricht. Im montierten Zustand verlaufen die Z-Achse, die B-Achse und die Hinterradachse A koaxial.

Das erfindungsgemäße erste Anschlussende des Basiselements einen ersten Arm und einen zweiten Arm auf. Der erste und der zweite Arm sind in axialer Richtung voneinander beabstandet angeordnet. Der erste Arm weist eine erste Zentrieröffnung und der zweite Arm eine zweite Zentrieröffnung auf. Die Mittelpunkte der beiden Zentrieröffnungen liegen auf derselben Achse Z.

Die beiden Arme dienen der Befestigung des Basiselements am Rahmen. Vorteilhaft bei dieser Ausgestaltung ist, dass die zwei voneinander beabstandeten Arme des Basiselements in montiertem Zustand des Schaltwerks eine stabile Ausrichtung des Schaltwerks parallel zur Rotationsebene der Ritzel und damit senkrecht zur Hinterradachse A gewährleisten. Ein Verkippen des Schaltwerks aus dieser Ebene wird auch bei größeren Kräften wirksam verhindert. Die zwei axial beabstandeten Befestigungspunkte des Basiselements an der Hinterradachse können die am Schaltwerk angreifenden Kräfte deutlich besser aufnehmen, als die bekannten Schaltwerke mit nur einem Befestigungspunkt.

Gemäß einer Ausführungsform befindet sich im montierten Zustand der erste Arm des Schaltwerks auf einer axialen Innenseite des Fahrradrahmens und der zweite Arm auf einer axialen Außenseite des Rahmens.

Mit Innenseite des Rahmens ist die in Richtung des Ritzelpakets weisende Seite des Rahmens gemeint. Mit der axialen Außenseite ist die, der Innenseite gegenüberliegende, vom Ritzelpaket wegweisende Seite des Rahmens gemeint.

Gemäß einer Ausführung des Schaltwerks weist das zweite Anschlussende des Basiselements eine erste Achsaufnahme für eine erste Schwenkachse des Schwenkmechanismus und eine zweite Achsaufnahme für eine zweite Schwenkachse des Schwenkmechanismus auf.

Über die erste Schwenkachse ist der innere Schwenkarm des Schwenkmechanismus mit dem Basiselement drehbar verbunden. Über die zweite Schwenkachse ist der äußere Schwenkarm des Schwenkmechanismus mit dem Basiselement drehbar verbunden. Dazu sind die Schwenkachsen in jeweils einer Achsaufnahme am Basiselement gelagert. Das zweite Anschlussende des Basiselements weist in Richtung des Schwenkmechanismus.

Insbesondere sind die Achsaufnahmen am Basiselement so ausgerichtet, dass sie die orthogonal zur Hinterradachse A orientierten Schwenkachsen aufnehmen können. Das heißt, die Achsaufnahmen bzw. deren Längsachsen sind auf die Schwenkachsen des Schwenkmechanismus abgestimmt und genau wie die Schwenkachsen jeweils orthogonal zur Hinterradachse A orientiert. Mit anderen Worten liegen die Längsachsen der ersten und zweiten Achsaufnahme des Basiselements jeweils in einer Ebene, die parallel zur Rotationsebene der Ritzel verläuft und damit auch die Hinterradachse A in einem rechten Winkel schneidet. Abweichungen bis etwa 5 Grad plus oder minus fallen in den Bereich von "im Wesentlich orthogonal". Diese Ausrichtung der Achsaufnahmen am Basiselement erlaubt die Kopplung mit einem geraden Schwenkmechanismus (gerades Parallelogramm-Viergelenk).

Insbesondere sind alle vier Schwenkachsen des Schwenkmechanismus orthogonal zur Hinterradachse A orientiert.

Aufgrund der orthogonal zur Hinterradachse A orientierten Schwenkachsen bewegt sich der Schwenkmechanismus nur in die axiale Richtung (horizontal). Vibrationen bzw. Schläge in vertikaler Richtung, wie sie beim Fahren in unebenem Terrain auftreten, können vom Schwenkmechanismus aufgenommen werden, ohne diesen zu bewegen. Ungewolltes Schalten wird verhindert. Darüber hinaus lässt sich ein Schaltwerk mit einem geraden Parallelogramm-Viergelenk besonders leicht montieren und einstellen.

Gemäß einer Ausführungsform des Schaltwerks umfasst die Kettenführungsanordnung ein oberes Kettenführungsröllchen. Die Kettenführungsanordnung ist um die P-Achse drehbar mit dem beweglichen Element verbunden. Das obere Kettenführungsröllchen ist in einem konstanten oberen Abstand von der Drehachse P der Kettenführungsanordnung drehbar angeordnet. Das Schaltwerk umfasst weiter ein unteres Kettenführungsröllchen, das in einem konstanten unteren Abstand von der Drehachse P der Kettenführungsanordnung drehbar angeordnet ist. Die Drehachse des oberen Kettenführungsröllchen ist von der P-Achse beabstandet. Der obere Abstand zwischen der Drehachse des oberen Kettenführungsröllchen und der Drehachse P der Kettenführungsanordnung ist kürzer bemessen, als der untere Abstand zwischen der Drehachse des unteren Kettenführungsröllchens und der Drehachse P.

Alternativ ist der Schwenkmechanismus als Schrägparallelogramm ausgebildet. Insbesondere sind dann die erste und die zweite Achsaufnahme des Basiselements jeweils schräg zur Hinterradachse A orientiert. Das heißt die Längsachsachsen der Achsaufnahmen stehen schräg zur Hinterradachse A, verlaufen also nicht orthogonal zu dieser. Gerade bei Rennrädern, die weniger starken Stößen ausgesetzt sind und meist Ritzelpakete mit einer geringeren Spreizung umfassen, wäre diese Ausführung trotz der oben angeführten Nachteile denkbar.

Gemäß einer Ausführung weist das Schaltwerk einen Adapter zur Verbindung des Basiselements mit dem Rahmen auf. Der Adapter umfasst insbesondere eine Schraubverbindung. Die Schraubverbindung wird von einem Bolzen mit einem Außengewinde und einer Mutter mit einem Innengewinde gebildet. Der Bolzen und die Mutter lassen sich entlang der B-Achse ineinander schrauben.

Der Adapter durchgreift die Rahmenöffnung am Ausfallende und die Zentrieröffnungen des Basiselements. Durch Anziehen der Schraubverbindung ist der Adapter gegenüber dem Rahmen sowohl in axiale Richtung, als auch rotatorisch festlegbar. Der Bolzenkopf des Bolzens und die Mutter sind größer bemessen als die Rahmenöffnung und liegen an dessen Innen- und Außenseite an. Die Mutter weist eine gerändelte Anlagefläche auf, die in fertig montiertem Zustand kraft- und formschlüssig am Rahmen anliegt. Ein erster Außendurchmesser des Adapters ist auf einen Innendurchmesser der ersten Zentrieröffnung des Basiselements abgestimmt. Und ein zweiter Außendurchmesser des Adapters ist auf einen Innendurchmesser der zweiten Zentrieröffnungen des Basiselements abgestimmt.

Der erste Arm des Basiselements ist im fahrbereiten Zustand zwischen der Nabenendkappe und dem Adapter angeordnet. Insbesondere ist der erste Arm des Basiselements kraftschlüssig und drehfest zwischen der Nabenendkappe und dem Adapter festgelegt. Der Kraftschluss wird durch Festziehen der Hinterradachse, insbesondere der Steckachse, erzeugt. Das Basiselement wird dabei zwischen der Nabenendkappe und dem Adapter geklemmt und gleichzeitig orthogonal zur Nabenachse ausgerichtet. Die übliche Referenzierung des Schaltwerks am Rahmen entfällt, so dass sich Fertigungstoleranzen des Rahmens nicht mehr negativ auf die Positionierung und Einstellung des Schaltwerks auswirken. Idealerweise ist das Basiselement mit Spiel zum Rahmen positioniert, so dass es diesen gerade nicht berührt. Im fahrbereiten Zustand ist das Schaltwerk und das Hinterrad eingebaut und die Steckachse festgezogen. Das Basiselement ist dann sowohl in axialer Richtung festgelegt, als auch drehfest an der Hinterradachse montiert. Außerdem umgreift das Basiselement den Adapter und ist gegenüber diesem zentriert.

Gemäß einer Ausführung des Schaltwerks ist der elektromechanische Antrieb im Bereich des Basiselements angeordnet.

Gemäß einer Ausführung ist der elektromechanische Antrieb als Schneckengetriebe ausgebildet. Die motorbetriebene Schnecke des Schneckengetriebes ist zumindest teilweise im Bereich des Basiselements angeordnet. Die Schnecke wirkt mit einem Schneckenrad am Schwenkmechanismus zusammen. Das Schneckenrad ist insbesondere am äußeren Schwenkarm ausgebildet. Zwischen der Schnecke und dem Schneckenrad könnten bei Bedarf weitere Getriebestufen vorgesehen sein.

Gemäß einer nicht beanspruchten Ausführungsform des Schaltwerks ist der elektromechanische Antrieb im Bereich des beweglichen Elements angeordnet.

Insbesondere ist bei dieser nicht beanspruchten Ausführungsform der elektromechanische Antrieb als Schneckengetriebe ausgebildet und dessen motorbetriebene Schnecke zumindest teilweise im Bereich des beweglichen Elements angeordnet. Dabei wirkt die Schnecke mit einem Schneckenrad am Schwenkmechanismus zusammen. Das Schneckenrad ist insbesondere am äußeren Schwenkarm als Segmentrad ausgebildet. Zwischen der Schnecke und dem Schneckenrad könnten bei Bedarf weitere Getriebestufen vorgesehen sein.

Gemäß der erfindungsgemäßen Ausführungsform ist der elektromechanische Antrieb in einem Getriebegehäuse aufgenommen. Insbesondere definiert das Basiselement einen Gehäusefreiraum, in dem das Getriebegehäuse zumindest teilweise angeordnet ist.

Je nach Positionierung des elektrischen Antriebs, muss die Größe entsprechend angepasst werden. Der elektrische Antrieb bzw. das ihn umgebende Getriebegehäuse können bei Bedarf aus dem Basiselement in den Freiraum zwischen den beiden Schwenkarmen des Schwenkmechanismus hineinragen.

Gemäß einer nicht beanspruchten Ausführungsform definiert das bewegliche Element einen Gehäusefreiraum, in dem das Getriebegehäuse zumindest teilweise angeordnet ist. Bei Bedarf kann der elektrische Antrieb bzw. das ihn umgebende Getriebegehäuse aus dem beweglichen Element in den Freiraum zwischen den beiden Schwenkarmen des Schwenkmechanismus hineinragen.

Die Anordnung des elektronischen Antriebs in einem Getriebegehäuse erlaubt einen modularen Aufbau des Schalwerks und vereinfacht dessen Zusammenbau. Insbesondere das Getriebe des elektrischen Antriebs kann als vormontiertes Modul gehandhabt und geprüft werden. Bei Bedarf kann ein schadhafter elektrischer Antrieb ausgetauscht werden, ohne dass die übrigen Elemente des Schaltwerks betroffen wären.

Der elektromechanische Antrieb umfasst im Allgemeinen einen Motor, ein Getriebe mit ein oder mehrere Getriebestufen und eine Ausgangswelle. Das an die Motorwelle angeschlossene Getriebe kann beispielsweise als Stirnradgetriebe, Kegelradgetriebe, Schneckengetriebe, Kronradgetriebe oder dergleichen ausgebildet sein. Unabhängig von der Getriebeart kann der elektrische Antrieb an verschiedenen Positionen des Schaltwerks angeordnet sein. Insbesondere eignet sich die Anordnung des elektrischen Antriebs im Bereich zwischen der B-Achse des Basiselements und der P-Achse des beweglichen Elements. Ebenfalls unabhängig von der Getriebeart kann der elektrische Antrieb in einem Getriebegehäuse aufgenommen sein oder direkt am Schaltwerk befestigt werden.

Gemäß der erfindungsgemäßen Ausführungsform ist das Basiselement mehrteilig ausgebildet. Das Basiselement umfasst zumindest ein erstes Basisteilelement zur Montage an einem Fahrradrahmen und ein zweites Basisteilelement zur Montage an dem ersten Basisteilelement. Der Gehäusefreiraum ist zwischen dem ersten und zweiten Basisteilelement definiert.

Im verbundenen Zustand des ersten und des zweiten Basisteilelements ist das Getriebegehäuse im Gehäusefreiraum form- und/oder kraftschlüssig festgelegt.

Für alle Ausführungsformen gilt, dass der elektrische Antrieb mit oder ohne Getriebegehäuse relativ zum Schaltwerk, insbesondere relativ zum Basiselement oder dem beweglichen Element festgelegt ist. Verschiedene herkömmliche Verbindungstechniken sind denkbar.

Gemäß der erfindungsgemäßen Ausführung des Schaltwerks umfasst das erste Basisteilelement das erste Anschlussende mit dem ersten Arm und dem zweiten Arm. Insbesondere ist das erste Basisteilelement einstückig mit dem ersten Anschlussende bzw. dem ersten und zweiten Arm ausgebildet.

Gemäß einer Ausführungsform weist das Schaltwerk eine Energiequelle auf. Die Energiequelle ist insbesondere lösbar am Basiselement angebracht. Eine gedachte Mittelebene erstreckt sich mittig und von oben nach unten und von hinten nach vorne durch die Energiequelle. Die Energiequelle ist derart mit dem Basiselement verbunden, dass ihre Mittelebene zwischen dem ersten Arm und dem zweiten Arm des Basiselements verläuft. Insbesondere verläuft die Mittelebene der Batterie in axialer Richtung zwischen den einander zugewandten Seiten des ersten und zweiten Arms - nämlich zwischen der ersten Armaußenseite des ersten Arms und zweiten Arminnenseite des zweiten Arms. Mit der Arminnenseite ist jeweils die im montierten Zustand des Basiselements in Richtung des Ritzelpakets weisende Seite der Arme gemeint. Mit der Armaußenseite ist jeweils die vom Ritzelpaket wegweisende Seite der Arme gemeint.

Aus dieser Anordnung der Batterie ergeben sich im am Rahmen montierten Zustand des Schaltwerks besondere Vorteile. Auch dem rechten Ausfallende des Fahrradrahmens kann eine gedachte Mittelebende zugeordnet werden. Im montierten Zustand des Schaltwerks verläuft die Mittelebene des Ausfallendes zwischen dem ersten und dem zweiten Arm des Basiselements, insbesondere zwischen der ersten Armaußenseite des ersten Arms und der ihr zugewandten zweiten Arminnenseite des zweiten Arms.

Die Mittelebene der Energiequelle verläuft etwa im Bereich der Mittelebene des Ausfallendes. Insbesondere verläuft die Mittelebene der Energiequelle in axialer Richtung weiter innen als die Mittelebene des Ausfallendes. Das heißt, die Energiequelle ist in etwa in einer Ebene mit dem Ausfallende angeordnet. Insbesondere ist die Energiequelle in Relation zum Ausfallende sogar axial nach innen versetzt angeordnet.

Die koaxiale Montage des Schaltwerks erlaubt die Anordnung des elektromechanischen Antriebs und der Energiequelle in einer Ebene mit dem rechten Ausfallende des Rahmens. Damit ist das koaxiale Schaltwerk relativ zum Rahmen wenig exponiert angeordnet. Empfindlichen Teile, insbesondere die des elektrischen Antriebs, sind besser geschützt. Im Vergleich sind nicht-koaxial montierte Schaltwerken relativ zum Rahmen in axialer Richtung weiter außen angeordnet. Damit ist deren elektromechanische Antrieb und auch die Energiequelle in Relation zum Ausfallende exponierter und anfälliger für Schläge und Beschädigungen.

Gemäß einer Ausführung weist der elektromechanische Antrieb eine elektrische Schnittstelle zu einer Energiequelle auf. Insbesondere weist das Getriebegehäuse des Antriebs die elektrische Schnittstelle zu einer Energiequelle auf. Die elektrische Schnittstelle ist insbesondere in Form von elektrischen Kontakten ausgebildet.

Gemäß einer Ausführungsform des Schaltwerks ist das Basiselement derart ausgebildet, dass eine Energiequelle so an dem Basiselement zu befestigen ist, dass die Energiequelle mit dem elektromechanischen Antrieb elektrisch verbunden ist.

Es handelt sich um eine direkte elektrische Verbindung zwischen dem Antrieb und der Energiequelle, wenn die Batterie benachbart zum elektromechanischen Antrieb angeordnet ist.

Alternative könnte die Energiequelle beabstandet vom elektrischen Antrieb angeordnet sein. Der elektrische Antrieb ist dann mit einem elektrischen Kabel mit der entfernt positionierten Energiequelle verbunden. Insbesondere könnte die Energiequelle beabstandet vom elektrischen Antrieb am Schaltwerk oder beabstandet vom Schaltwerk am Rahmen angeordnet sein.

Bei Fahrrädern, die mit einem Elektroantrieb betrieben werden (E-Bike),
könnte das Schaltwerk über einen vom Schaltwerk beabstandeten Akkumulator des Elektroantriebs versorgt werden. Das Schaltwerk ist dann über ein Kabel mit dem Akkumulator des E-Bike Antriebs verbunden.

Das elektromechanische Schaltwerk kann insbesondere in einem Fahrradantrieb eingesetzt werden, der eine Mehrfach-Ritzelanordnung mit elf, zwölf oder mehr Ritzeln, eine Fahrradkette und eine Kettenringanordnung mit genau einem Kettenring umfasst. Alternativ sind auch Ausführungen mit mehreren Kettenringen denkbar, die mit einem vorderen elektrischen Umwerfer geschaltet werden. Insbesondere eine kabellose Steuerung des Schaltwerks und/oder des Umwerfers ist vorgesehen.

Es kann zumindest ein Ritzel der Mehrfach-Ritzelanordnung eine Abfolge von einem dünnen Zahn, einem dicken Zahn und einem weiteren dünnen Zahn aufweisen. Dabei ist ein dicker Zahn in axialer Richtung so dick ausgebildet, dass er in ein Außenlaschenpaar der Kette eingreifen kann, nicht aber in ein Innenlaschenpaar. Dies wirkt sich positiv auf die Kettenführung aus. Die Abfolge kann sich entlang des Umfangs eines Ritzels mehrfach wiederholen. Bei Ritzeln mit gerader Zähnezahl können auch alle Zähne im Wechsel dünn und dick ausgebildet sein. Die axiale Verdickung kann entweder auf beiden Seiten des Ritzels ausgeprägt sein, oder nur an einer. Vorzugsweise ist die Verdickung nur an der Rückseite des Ritzels angeordnet. Gerade an den beiden größten Ritzeln ist sie von besonderer Bedeutung, weil dort der Kettenschräglauf am stärksten ausgebildet ist. Durch die verbesserte Führung der Kette werden die Negativfolgen des Kettenschräglaufs minimiert.

Auch der vordere Einzelkettenring kann alternierende dicke und dünne Zähne aufweisen, die der verbesserten Kettenführung dienen.

### Kurzbeschreibung der Zeichnungen:

- Fig. 1: elektromechanisches Schaltwerk an einem Fahrrad montiert
- Fig. 2a: Außenansicht einer Unterbraugruppe des Schaltwerks am Rahmen montiert
- Fig. 2b: Innenansicht der Unterbaugruppe aus Fig. 2a
- Fig. 2c: Perspektivische Außenansicht der Unterbaugruppe aus Fig. 2a
- Fig. 2d: Rückansicht der Unterbaugruppe aus Fig. 2a
- Fig. 3: Perspektivische Explosionsdarstellung im nicht montierten Zustand
- Fig. 4: Draufsicht auf die Unterbaugruppe ohne Rahmen
- Fig. 5a: Vorderansicht der reduzierten Unterbaugruppe (ohne bewegliches Element)
- Fig. 5b: Perspektivische Innenansicht der Unterbaugruppe aus Fig. 5a
- Fig. 6: Perspektivische Darstellung eines Längsschnitts durch eine Unterbaugruppe
- Fig. 7: Perspektivische Darstellung eines Querschnitts durch eine Unterbaugruppe ohne Gehäuseoberteil
- Fig. 8: Perspektivische Außenansicht der zweiten Ausführungsform
- Fig. 9: Draufsicht auf die zweite Ausführungsform ohne Kettenführungsanordnung
- Fig. 10: Perspektivische Außenansicht der dritten Ausführungsform
- Fig. 11a: Draufsicht auf die dritte Ausführungsform ohne Kettenführungsanordnung
- Fig. 11b: Perspektivische Ansicht der dritte Ausführungsform aus Fig. 11a
- Fig. 12: Perspektivische Außenansicht einer vierten Ausführungsform des elektromechanischen Schaltwerks am Rahmen montiert
- Fig. 13a: Außenansicht des elektromechanischen Schaltwerks
- Fig. 13b: Rückansicht des elektromechanischen Schaltwerks
- Fig. 14: Perspektivischer Teilschnitt durch eine Unterbaugruppe eines Schaltwerks
- Fig. 15: Perspektivischer Teilschnitt durch eine Unterbaugruppe eines Schaltwerks
- Fig. 16: Perspektivische Innenansicht einer Unterbaugruppe eines Schaltwerks mit Antriebsarm
- Fig. 17: Perspektivische Innenansicht einer Unterbaugruppe eines Schaltwerks der fünften Ausführungsform
- Fig. 18: Perspektivische Außenansicht einer Unterbaugruppe eines Schaltwerks der sechsten Ausführungsform
- Fig. 19: Perspektivische Außenansicht eines elektromechanischen Schaltwerks der siebten Ausführungsform

### Detaillierte Beschreibung der bevorzugten Ausführungsformen

Die Ausführungsformen werden in Bezug auf die Zeichnungen beschrieben. Es versteht sich, dass die dargelegten Zeichnungen und Beschreibungen lediglich zur Veranschaulichung bereitgestellt werden und die Erfindung nicht einschränken. Für ein besseres Verständnis der Erfindung zeigen die Figuren verschiedene Unterbaugruppen bzw. Montagestadien der Schaltwerksausführungen in verschiedenen Maßstäben.

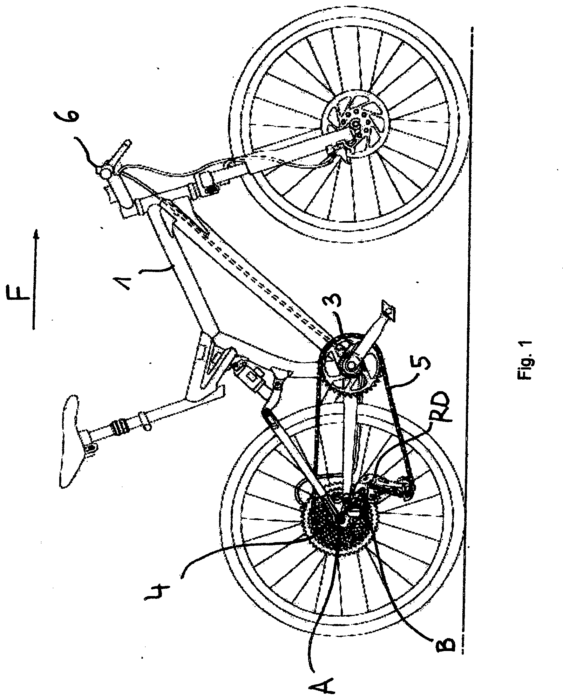

Die im Folgenden verwendeten Richtungsangaben "vorne/hinten", "außen/innen, "oben/unten", und "links/rechts" beziehen sich auf ein Fahrrad, das wie in Figur 1 dargestellt in Fahrtrichtung F (Pfeilrichtung) ausgerichtet und verwendet wird. Der Fahrradrahmen 1 hat ein linkes und ein rechtes hinteres Ausfallende, zwischen denen das Hinterrad montiert ist. Das Hinterrad dreht sich zusammen mit dem Ritzelpaket 4 um die Hinterradachse A. Das elektromechanische Schaltwerk RD ist am rechten Ausfallende 2 montiert. Beim Schalten von einem größeren Ritzel auf ein kleineres Ritzel, bewegt das hintere Schaltwerk RD die Kette 5 nach außen (outboard). Beim Schalten von einem kleineren Ritzel auf ein größeres Ritzel, bewegt das hintere Schaltwerk RD die Kette 5 nach innen (inboard). Axial bezieht sich auf die Hinterradachse A bzw. die Drehachse A der Mehrfach-Ritzelanordnung 4. Das größte Ritzel liegt axial weiter innen als die kleineren Ritzel. Die Zähne sind radial außen an den Ritzeln angeordnet.

Das elektromechanisches Schaltwerke RD, ist am rechten Ausfallende 2 des Fahrradrahmens 1 montiert. Im dargestellten Fall ist das Schaltwerk RD in herkömmlicher Weise mittels Schaltauge montiert. Dazu ist das Schaltauge einerseits mit der Hinterradachse entlang der Achse A und andererseits mit dem Basiselement des Schaltwerks entlang der B-Achse verbunden. Die B-Achse des Basiselements ist von der Hinterradachse A beabstandet. Dieser Abstand wird vom Schaltauge überbrückt. Das gezeigte Schaltwerk RD ist damit nicht-koaxial mit der Hinterradachse A montiert.

Der in Figur 1 gezeigte Fahrradantrieb umfasst ein vorderes Einzelkettenrad 3, ein hinteres Ritzelpaket 4 und eine Kette 5, die mit Hilfe des hinteren Schaltwerks RD von einem Ritzel zum nächsten bewegt werden kann. Von einem am Lenker montierten Schalter 6 werden Schaltsignale an das elektromechanische Schaltwerk RD gesendet. Die Übertragung der Schaltsignale vom Schalter 6 zum Schaltwerk RD erfolgt kabellos bzw. drahtlos. Eine Übertragung der Schaltsignale mittels Kabel wäre ebenfalls denkbar.

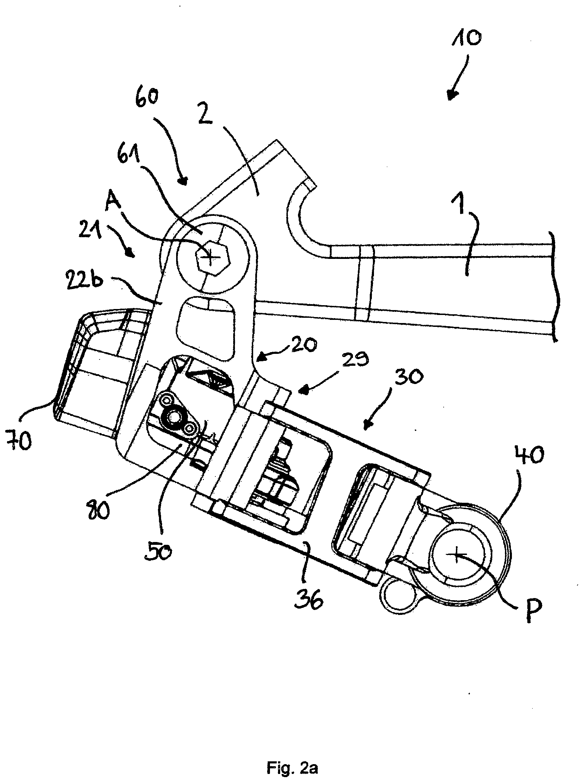

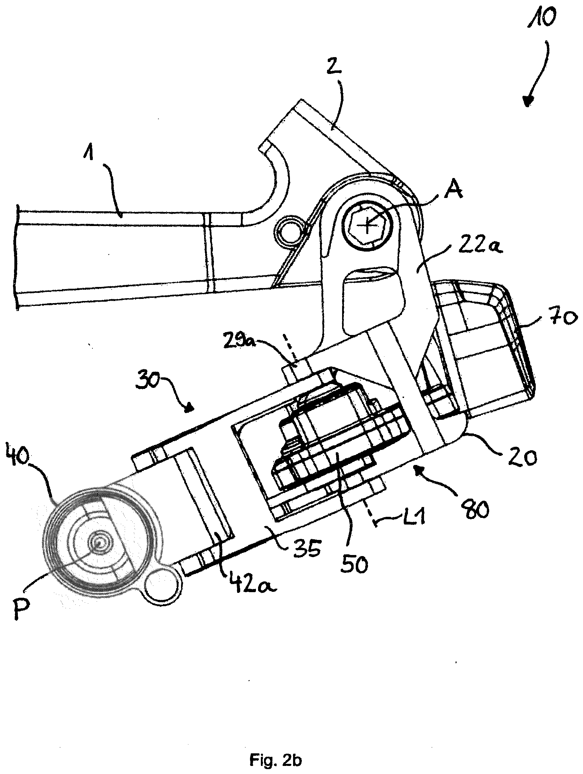

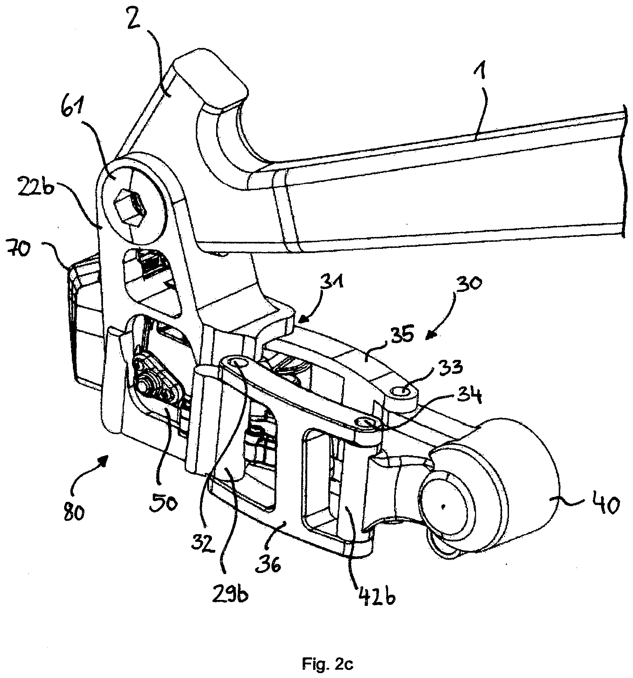

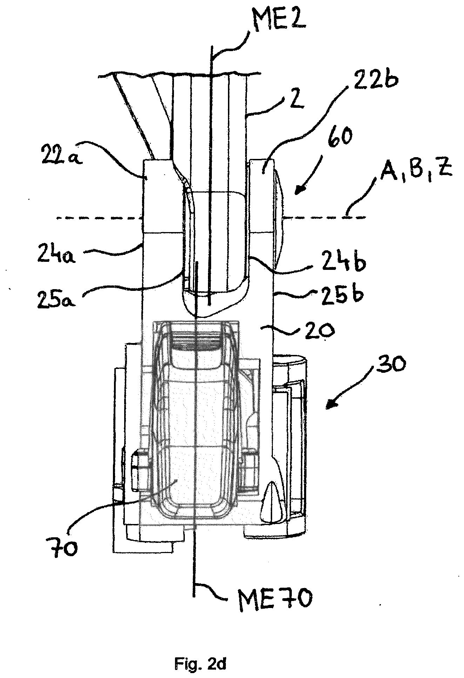

Die Figuren 2 bis 7 zeigen das erste Ausführungsbeispiel des elektromechanischen Schaltwerks in verschiedenen Ansichten und Montagezuständen.

Figuren 2a, 2b, 2c und 2d zeigen verschiedenen Ansichten einer Unterbaugruppe des elektromechanischen Schaltwerks 10, welches koaxial mit der Hinterradachse A am rechten Ausfallende 2 des Rahmens 1 montiert ist. Das elektromechanische Schaltwerk 10 umfasst ein Basiselement 20, ein bewegliches Element 40, das über einen Schwenkmechanismus 30 beweglich mit dem Basiselement 20 verbunden ist, einen elektromechanischen Antrieb 80 und eine Kettenführungsanordnung, die hier zur besseren Übersichtlichkeit nicht dargestellt ist.

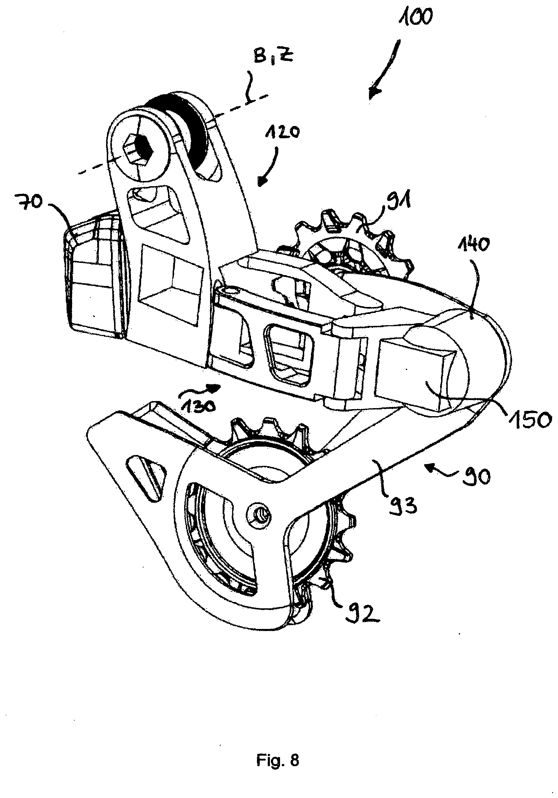

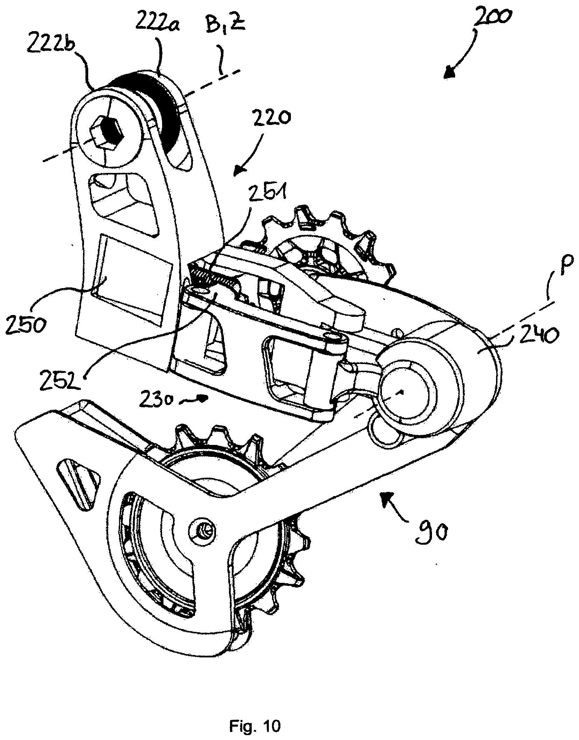

Eine Kettenführungsanordnung besteht aus einem Kettenführungskäfig und darin drehbar gelagerten unteren und oberen Kettenführungsröllchen. Die Kettenführungsanordnung ist um eine Drehachse P drehbar mit dem beweglichen Element 40 verbunden. Die Drehachse des oberen Kettenführungsröllchen ist von der P-Achse des beweglichen Elements 40 beabstandet. Eine solche Kettenführungsanordnung 90 ist exemplarisch in den Ausführungsformen in Figur 8 und Figur 10 gezeigt. Diese Kettenführungsanordnung 90 ist auch zur Kombination mit der in den Figuren 1 bis 7 gezeigten Ausführungsform geeignet.

Figur 2a zeigt eine Außenansicht der Unterbaugruppe. Das Basiselement 20 weist an seinem ersten, oberen Anschlussende 21 zwei in axialer Richtung voneinander beabstandete Arme 22a und 22b auf. Die Arme 22a und 22b des Basiselements 20 umgreifen das rechte Ausfallende 2, so dass im montierten Zustand der erste Arm 22a auf der Innenseite des Rahmens 1 und der zweite Arm 22b auf der Außenseite des Rahmens 1 angeordnet ist. Das Schaltwerk 10 ist über den Adapter 60, bestehend aus Bolzen 61 und Mutter, lösbar am Rahmen 1 montiert. Der zweite Arm 22b des Basiselements 20 ist in der Außenansicht in Figur 2a und der erste Arm 22a des Basiselements 20 in der Innenansicht in Figur 2b zu sehen.

Das Umgreifen des rechten Ausfallendes 2 der beiden Arme 22a, 22b ist in der perspektivischen Ansicht in der Figur 2c und in der Rückansicht in Figur 2d gut zu sehen.

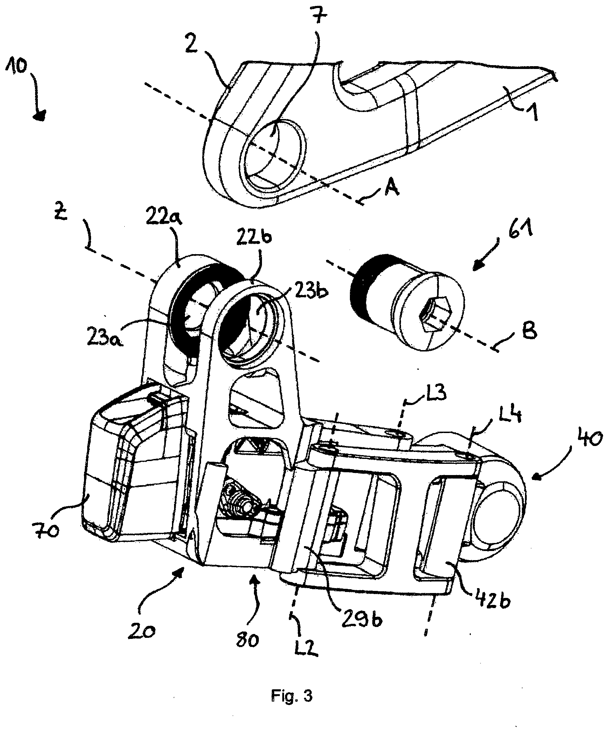

In der perspektivischen Explosionsdarstellung in Figur 3 ist zu erkennen, dass der erste Arm 22a des Basiselements 20 eine erste Zentrieröffnung 23a und der zweite Arm 22b eine zweite Zentrieröffnung 23b aufweist. Die Zentrieröffnungen 23a, 23b erstrecken sich entlang der Z-Achse. Der Rahmen 1 weist am rechten Ausfallende 2 eine Rahmenöffnung 7 auf, welche sich koaxial zur Hinterradachse A erstreckt. Der Bolzen 61 durchgreift im montierten Zustand sowohl die beiden Zentrieröffnungen 23a, 23b in den Armen 22a, 22b des Basiselements 20 als auch die Rahmenöffnung 7 und wird entlang seiner B-Achse mit der Mutter verschraubt. Die A-Achse der Rahmenöffnung 7, die B-Achse des Adapters 60 bzw. Bolzens 61 und die Z-Achse der Zentrierungsöffnungen 23a und 23b des Basiselements 20 werden im nicht montierten Zustand in der Explosionsdarstellung in Figur 3 sichtbar.

Im montierten Zustand verlaufen die B-Achse des Adapters 60 und die Z-Achse der Zentrieröffnungen 23a, 23b des Basiselements 20 koaxial zur Rahmenöffnung 7 und damit zur Hinterradachse A angeordnet. Das Zusammenfallen der drei Achsen A, B und Z im montierten Zustand ergibt sich aus den Figuren 2a-d. Unter der koaxialen Montage des elektromechanischen Schaltwerks 10 an der Hinterradachse A ist das Zusammenfallen der B-Achse des Schaltwerks 10 und der Hinterradachse A zu verstehen. Bei nicht-koaxial montierten Schaltwerken ist die B-Achse des Schaltwerks von der Hinterradachse A beabstandet.

Das Basiselement 20 ist an seinem zweiten, unteren Anschlussende 29 mit dem Schwenkmechanismus 30 gekoppelt. Der Schwenkmechanismus 30 ist als gerades Parallelogramm-Viergelenk ausgebildet und umfasst einen inneren Schwenkarm 35, einen äußeren Schwenkarm 36 und vier Schwenkachsen 31, 32, 33, 34. Die Schwenkachsen 31, 32, 33, 34 sind als Achsstifte ausgebildet. Das Basiselement 20 weist an seinem zweiten Anschlussende 29 die erste und zweite Achsaufnahmen 29a und 29b zur Aufnahme der ersten und zweiten Schwenkachsen 31, 32 des Schwenkmechanismus 30 auf.

Der innere Schwenkarm 35 ist über die erste Schwenkachse 31 mit dem Basiselement 20 drehbar verbunden. Die erste Schwenkachse 31 durchgreift den inneren Schwenkarm 35 und die erste Achsaufnahme 29a am Basiselement 20. Der innere Schwenkarm 35 ist um die erste Schwenkachse 31 relativ zum Basiselement 20 verschwenk- bzw. drehbar. Gleichermaßen ist der äußere Schwenkarm 36 über die zweite Schwenkachse 32 mit dem Basiselement 20 verbunden. Die zweite Schwenkachse 32 durchgreift den äußeren Schwenkarm 36 und die zweite Achsaufnahme 29b am Basiselement 20. Der äußere Schwenkarm 36 ist um die zweite Schwenkachse 32 relativ zum Basiselement 20 drehbar.

Die dritte und vierte Schwenkachse 33, 34 verbindet den Schwenkmechanismus 30 mit dem beweglichen Element 40 (P-Knuckle). Das bewegliche Element 40 weist die dritte und vierte Achsaufnahme 42a, 42b zur Aufnahme der dritten und vierten Schwenkachsen 33, 34 des Schwenkmechanismus 30 auf. Der innere Schwenkarm 35 ist über die dritte Schwenkachse 33 mit dem beweglichen Element 40 drehbar verbunden. Die dritte Schwenkachse 33 durchgreift den inneren Schwenkarm 35 und die dritte Achsaufnahme 42a am beweglichen Element 40. Somit ist der innere Schwenkarm 35 um die dritte Schwenkachse 33 relativ zum beweglichen Element 40 verschwenk- bzw. drehbar. Gleichermaßen ist der äußere Schwenkarm 36 über die vierte Schwenkachse 34 mit dem beweglichen Element 40 verbunden. Die vierte Schwenkachse 34 durchgreift den äußeren Schwenkarm 36 und die vierte Achsaufnahme 42b am beweglichen Element 40. Der äußere Schwenkarm 36 ist um die vierte Schwenkachse 34 relativ zum beweglichen Element 40 drehbar.

Das bewegliche Element 40 und damit auch die Kettenführungsanordnung 90 werden in axialer Richtung bewegt, indem der Schwenkmechanismus 30 relativ zum feststehenden Basiselement 20 verschwenkt wird (Horizontalbewegung). Beim Schalten von einem Ritzeldurchmesser zum nächsten ändert sich die Kettenspannung, was zu einer Drehung der Kettenführungsanordnung um die P-Achse führt. Durch die Drehung der Kettenführungsanordnung relativ zum beweglichen Element 40 um die P-Achse, verändert sich der Abstand der Kettenführungsrollen relativ zum Ritzelpaket (Vertikalbewegung).

In den gezeigten Ausführungsbeispielen verlaufen die vier Schwenkachsen 31, 32, 33, 34 jeweils orthogonal zur Hinterradachse A. Mit anderen Worten liegen die Schwenkachsen 31, 32, 33, 34 jeweils in Ebenen, die sich parallel zu den Ritzelebenen erstrecken (vgl. Figur 1). Wie aus den Figuren 2 und 3 ersichtlich ist, sind auch die Längsachsen L1, L2 der Achsaufnahmen 29a, 29b am Basiselement 20 und die Längsachsen L3, L4 der Achsaufnahmen 42a, 42b am beweglichen Element 40 entsprechend orthogonal zur Hinterradachse A ausgerichtet.

Weiterhin ist in den Figuren 2 und 3 der elektromechanische Antrieb 80 des elektromechanischen Schaltwerks 10 dargestellt. Der elektromechanische Antrieb 80 ist zum Antreiben des Schwenkmechanismus 30 geeignet. Der Antrieb 80 ist im Bereich des Basiselements 20 angeordnet. Das Basiselement 20 definiert einen Freiraum, in dem der elektromechanische Antrieb 80 angeordnet ist. In der gezeigten Ausführungsform ist der elektromechanische Antrieb 80 von einem Getriebegehäuse 50 umschlossen. Das Getriebegehäuse 50 ist in dem Freiraum des Basiselements 20 form- und kraftschlüssig gehalten.

Das Basiselement 20 kann zwei- oder mehrteilig ausgebildet sein, um das Einsetzen des Getriebegehäuses 50 mit dem Antrieb 80 zu erleichtern. Alternativ könnte das Getriebegehäuse 50 von einer offenen Seite des Basiselements 20 eingeführt und dann mit dem Basiselement 20 verbunden werden.

Aus der Figur 2d erschließt sich die Positionierung des elektromechanischen Antriebs 80 und der Energiequelle 70 in Relation zum Fahrradrahmen 1 bzw. dem rechten Ausfallende 2. Der elektromechanische Antrieb 80 im Gehäuse 50 wird durch die Energiequelle 70 mit Strom versorgt. Die Energiequelle 70 ist abnehmbar am Basiselement 20 angebracht. Es erstreckt sich eine gedachte Mittelebene ME70 mittig durch die Energiequelle 70. Die Mittelebene ME70 erstreckt sich von oben nach unten und von hinten nach vorne durch die Energiequelle 70. Die Energiequelle 70 ist derart mit dem Basiselement 20 verbunden, dass ihre Mittelebene ME70 zwischen dem ersten Arm 22a und dem zweiten Arm 22b des Basiselements 20 verläuft.

Der erste Arm 22a weist eine axiale erste Arminnenseite 24a und eine axiale erste Armaußenseite 25a auf, die entgegengesetzt zur ersten Arminnenseite 24a angeordnet ist. Der zweite Arm 22b weist ebenfalls eine axiale zweite Arminnenseite 24b und eine axiale zweite Armaußenseite 25b auf, die entgegengesetzt zur zweiten Arminnenseite 24b angeordnet ist. Die erste Arminnenseite 24a des ersten Arms 22a und die zweite Armaußenseite 25b des zweiten Arms 22b weisen voneinander weg.

Die erste Armaußenseite 25a des ersten Arms 22a und die zweite Arminnenseite 24b des zweiten Arms 22b weisen aufeinander zu. Die Mittelebene ME70 der Batterie 70 verläuft in axialer Richtung zwischen der ersten Arminnenseite 24a des ersten Arms 22a und der zweiten Armaußenseite 25b des zweiten Arms 22b. Insbesondere verläuft die Mittelebene ME70 der Batterie 70 zwischen der ersten Armaußenseite 25a des ersten Arms 22a und der zweiten Arminnenseite 24b des zweiten Arms 22b.

Auch dem rechten Ausfallende 2 des Fahrradrahmens 1 kann eine gedachte Mittelebende ME2 zugeordnet werden. Im montierten Zustand des Schaltwerks 10 verläuft die Mittelebene ME2 des Ausfallendes 2 ebenfalls zwischen dem ersten Arm 22a und dem zweiten Arm 22b des Basiselements 20, insbesondere zwischen der ersten Armaußenseite 25a des ersten Arms 22a und der zweiten Arminnenseite 24b des zweiten Arms 22b.

Die Mittelebene ME70 der Energiequelle 70 verläuft etwa in dem Bereich der Mittelebene ME2 des Ausfallendes 2. Insbesondere verläuft die Mittelebene ME70 in axialer Richtung weiter innen als die Mittelebene ME2 des Ausfallendes 2. Das heißt, die Energiequelle 70 ist in etwa in einer Ebene - bzw. in etwa fluchtend - mit dem Ausfallende 2 angeordnet. Insbesondere kann die Energiequelle 70 in Relation zum Ausfallende 2 axial nach innen versetzt angeordnet sein.

Entsprechend ist auch der elektromechanische Antrieb 80 des Schaltwerks 10 im Bereich der Mittelebene ME2 des Ausfallendes 2 angeordnet.

Die koaxiale Montage des Schaltwerks 10 entlang der Hinterradachse A, erlaubt die Anordnung des elektromechanische Antriebs 80 und der Energiequelle 70 etwa in einer Ebene mit dem Ausfallende 2. Das koaxiale Schaltwerk 10 und damit auch der elektromechanische Antrieb 50 sind relativ zum Rahmen 1 weniger exponiert angeordnet und daher besser geschützt. Dies gilt für alle drei Ausführungsformen gleichermaßen.

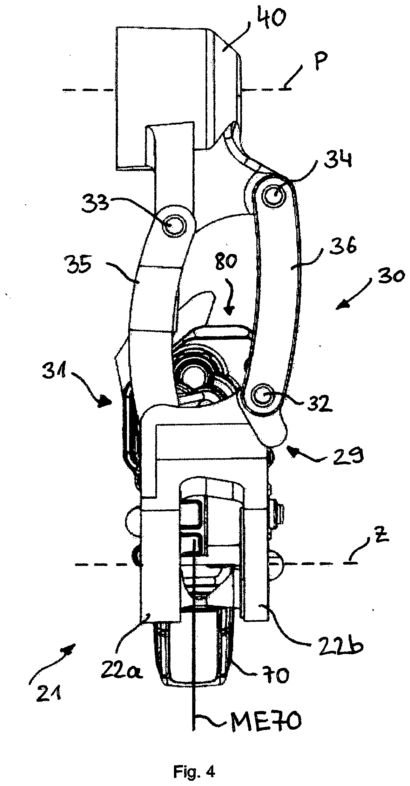

Figur 4 zeigt eine Draufsicht auf die Unterbaugruppe aus Figur 2a ohne den Adapter 60. Die Unterbaugruppe ist nicht am Rahmen montiert. Auch in dieser Ansicht ist die Mittelebene ME70 der Energiequelle 70 eingezeichnet, welche sich in axialer Richtung A gesehen zwischen dem inneren Arm 22a und dem äußeren Arm 22b des Basiselements 20 erstreckt.

Der elektromechanische Antrieb 80 ist von dem Getriebegehäuse 50 umgeben und zumindest teilweise in einem Freiraum des Basiselements 20 angeordnet. Eine in etwa mittig verlaufende Mittelebene des elektromechanischen Antriebs 80, welche sich von vorne nach hinten und von oben nach unten durch das Getriebegehäuse 50 erstreckt, verläuft ebenfalls zwischen dem inneren Arm 22a und dem äußeren Arm 22b des Basiselements 20. Die Mittelebene des elektrischen Antriebs 80 verläuft entlang seiner Längsachse und schneidet die Z-Achse der Zentrieröffnungen der Arme 22a, 22b im rechten Winkel. In axialer Richtung verläuft die Mittelebene des elektrischen Antriebs 80 zwischen dem inneren Arm 22a und dem äußeren Arm 22b. Insbesondere verläuft die Mittelebene des elektrischen Antriebs 80 in axialer Richtung zwischen der ersten Arminnenseite 24a des ersten Arms 22a und der zweiten Armaußenseite 25b des zweiten Arms 22b. Insbesondere verläuft die Mittelebene des elektrischen Antriebs 80 zwischen der ersten Armaußenseite 25a des ersten Arms 22a und der zweiten Arminnenseite 24b des zweiten Arms 22b.

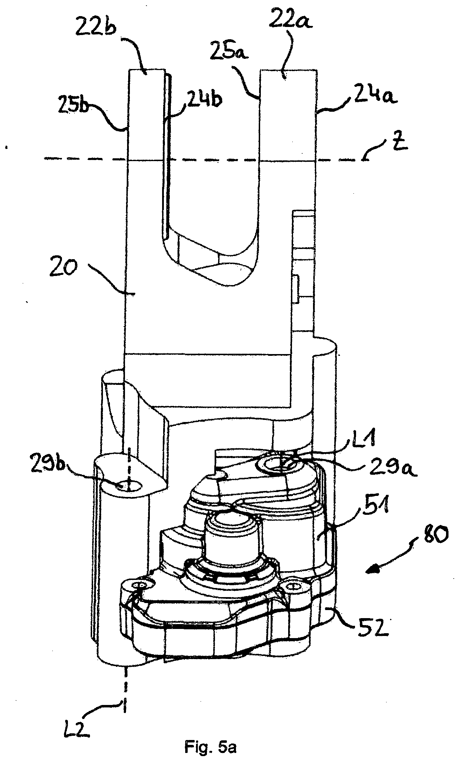

Die Positionierung des elektrischen Antriebs 80 relativ zum Basiselement 20 ist auch in der Vorderansicht der weiter reduzierten Unterbaugruppe in Figur 5a ersichtlich. Zur besseren Übersichtlichkeit ist nur das Basiselement 20 und der im Freiraum des Basiselements 20 angeordnete elektromechanische Antrieb 80 gezeigt. Das Getriebegehäuse 50 umschließt den elektromechanischen Antrieb 80. Die gedachte Mittelebene des elektrischen Antriebs 80 verläuft zwischen der ersten Armaußenseite 25a des ersten Arms 22a und der zweiten Arminnenseite 24b des zweiten Arms 22b.

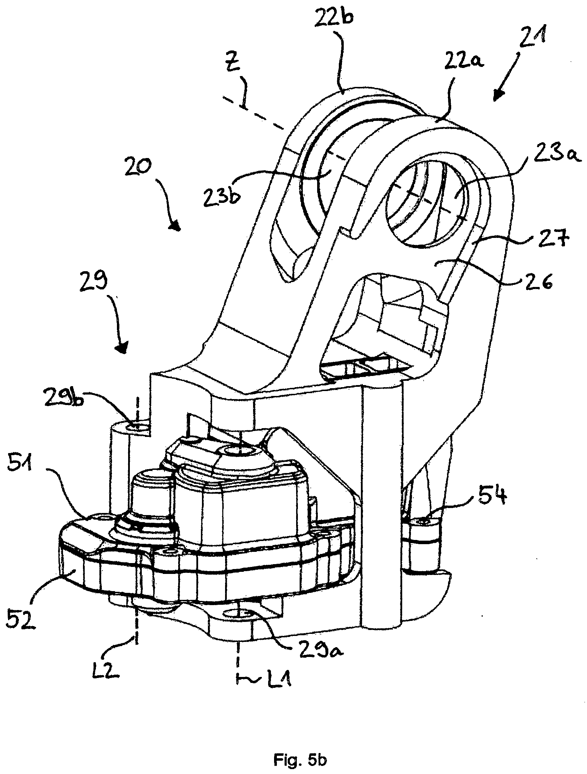

Figur 5b zeigt eine perspektivische Innenansicht der Unterbaugruppe aus Figur 5a. Das Getriebegehäuse 50 weist einen ersten Gehäuseteil 51 und einen zweiten Gehäuseteil 52 auf, die an mehreren Gehäusefügepunkten 54 miteinander verbunden z. B. verschraubt werden.

In dieser Ansicht sind die Zentrieröffnungen 23a und 23b in den Armen 22a und 22b des Basiselements 20 sichtbar, welche sich entlang der Z-Achse erstrecken. Außerdem ist auf der axialen Innenseite des ersten Anschlussendes 21 des Basiselements 20 eine Nabenführung 27 und eine axiale Nabenanschlagsfläche 26 ausgebildet. Die Nabenführung 27 ist als Bund mit aufeinander zulaufenden Führungsflächen geformt. Zur Montage eines hier nicht gezeigten Hinterrads wird dieses zusammen mit der Nabenanordnung und der Nabenendkappe entlang der Nabenführung 27 des Basiselements 20 geführt. Die Nabenendkappe liegt in ihrer Endposition radial an der Nabenführung 27 an. In axialer Richtung stößt die Nabenendkappe gegen die axiale Nabenanschlagsfläche 26. Das Basiselement 20 und damit das gesamte Schaltwerk 10 ist an der Nabe referenziert - und nicht wie bei herkömmlichen Schaltwerken am Rahmen 1.

Am zweiten Anschlussende 29 des Basiselements 20 sind die erste Achsaufnahme 29a und die zweite Achsaufnahme 29b angeordnet. Die erste Achsaufnahme 29a zur Aufnahme der ersten Schwenkachse 31 des Schwenkmechanismus 30 erstreckt sich entlang der Längsachse L1. Die zweite Achsaufnahme 29b erstreckt sich entlang der Längsachse L2 und ist zur Aufnahme der zweiten Schwenkachse 32 des Schwenkmechanismus 30 ausgebildet.

Die erste Achsaufnahme 29a des Basiselements 20 liegt in etwa in einer ersten Ebene mit dem ersten Arm 22a des Basiselements 20. Die zweite Achsaufnahme 29b des Basiselements 20 liegt in etwa in einer zweiten Ebene mit dem zweiten Arm 22b des Basiselements 20. Im montierten Zustand des Schaltwerks 10 liegt die erste Ebene axial weiter innen als die zweite Ebene. Der elektromechanische Antrieb 80 ist zumindest teilweise, insbesondere größtenteils, zwischen der ersten und zweiten Ebene angeordnet. Die erste und zweite Ebene des Basiselements 20 schneidet die Hinterradachse A jeweils im rechten Winkel.

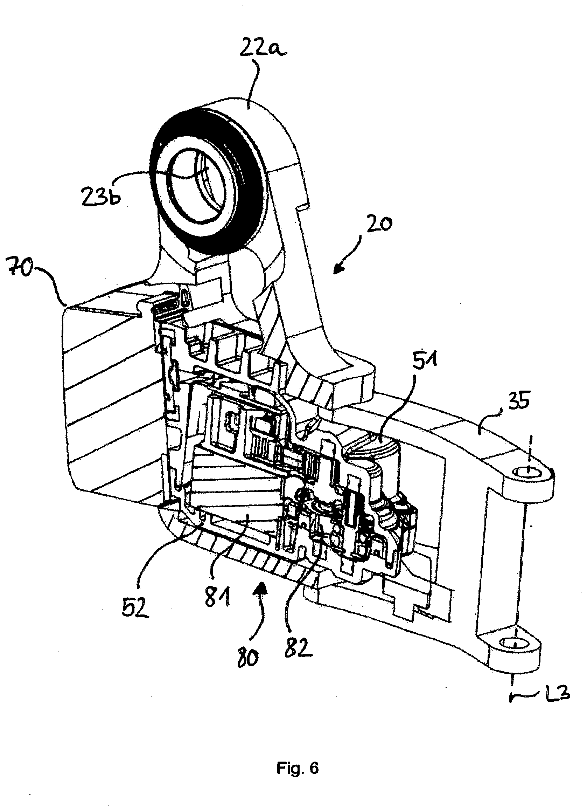

Figur 6 zeigt eine perspektivische Darstellung eines Längsschnitts durch eine Unterbaugruppe des Schaltwerks 10. Der Längsschnitt verläuft in etwa entlang der Mittelebene des elektrischen Antriebs 80 und damit auch zwischen dem ersten und dem zweiten Arm 22a, 22b. In dieser Ansicht ist nur noch die innere Hälfte der Unterbaugruppe, nämlich der innere Arm 22a mit der Zentrieröffnung 23a und der innere Schwenkarm 35 zu sehen. Im Längsschnitt wird der im Gehäuse 50, insbesondere zwischen dem oberen Gehäuseteil 51 und dem unteren Gehäuseteil 52, angeordnete elektrische Antrieb 80 sichtbar. Der elektrische Antrieb 80 umfasst einen Motor 81, eine Ausgangswelle 83 und mehrere zwischengeschaltete Getriebestufen 82. Der Motor 81 ist mit der Energiequelle 70 elektrisch verbunden. Der Motor 81 wird durch drahtlos übertragene Schaltsignale des Schalters 6 gesteuert und treibt das Getriebe 82 und die Ausgangswelle 83 je nach Schaltsignal in die eine oder andere Drehrichtung an. Der Längsschnitt verläuft auch in etwa entlang der Längsachse des Motors 81.

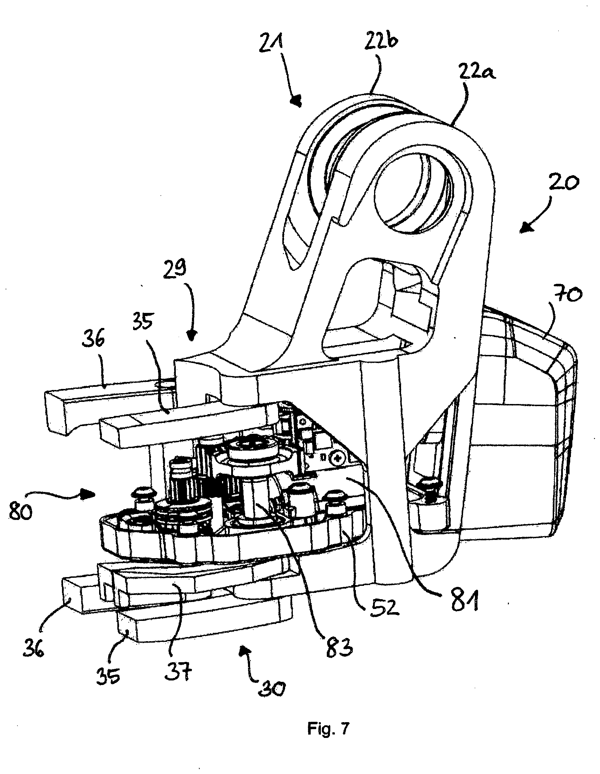

Figur 7 zeigt eine perspektivische Darstellung eines Querschnitts durch die reduzierte Unterbaugruppe. Die Unterbaugruppe umfasst den Schwenkmechanismus 30, das Basiselement 20, den elektromechanischen Antrieb 80 und die Batterie 70. Der Querschnitt verläuft durch die Schwenkarme 35, 36 des Schwenkmechanismus 30. Das obere Gehäuseteil 51 ist ausgeblendet und gibt den Blick auf den elektromechanischen Antrieb 80 frei. Der Motor 81 treibt die Getriebestufen 82 und die Ausgangswelle 83 an. Die Längsachse des Motors 81 steht in etwa senkrecht zur Ausgangswelle 83. Die Ausganswelle 83 ist drehfest mit dem Antriebsarm 37 an, welcher den Schwenkmechanismus 30 antreibt. Eine elektronische Steuerung ist über dem Motor 81 angeordnet und ist elektrisch mit dem Motor 81 verbunden.

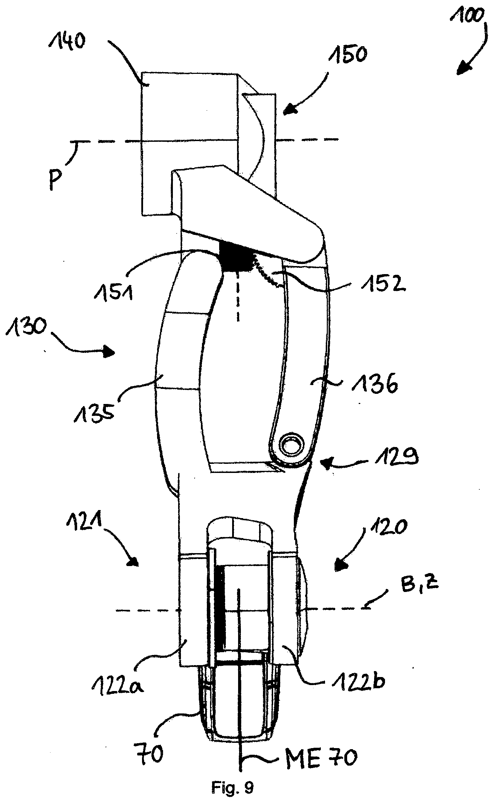

In Figur 8 und 9 ist eine zweite, nicht beanspruchte Ausführungsform eines elektromechanischen Schaltwerks 100 zur koaxialen Montage mit der Hinterradachse A gezeigt. Die zweite Ausführungsform unterscheidet sich von der vorhergehenden Ausführungsform in erster Linie durch die Position des elektromechanischen Antriebs 150. Der Antrieb 150 ist im Bereich des beweglichen Elements 140 angeordnet. Insbesondere ist der Antrieb 150 zumindest teilweise in einem vom beweglichen Element 140 definierten Freiraum angeordnet und am beweglichen Element 140 festgelegt.

Die übrigen Teile des alternativen Schaltwerks 100 unterscheiden sich nur unwesentlich von der vorhergehenden Ausführungsform. Das Basiselement 120 weist an seinem ersten Anschlussende 121 zwei Arme 122a, b auf, welche zur Montage am Fahrradrahmen von einem Bolzen entlang der B-Achse bzw. Z-Achse durchgriffen werden. Das Basiselement 120 weist an seinem zweiten Anschlussende 129 zwei Achsaufnahmen für die Schwenkachsen zur drehbaren Lagerung der Schwenkarme 135, 136 des Schwenkmechanismus 130 auf. Die Längsachsen der Achsaufnahmen verlaufen im Wesentlichen parallel zu den Ritzelebenen bzw. schneiden die Hinterradachse A im rechten Winkel.

In Figur 8 ist auch eine Kettenführungsanordnung 90 dargestellt. Die Kettenführungsanordnung 90 ist um die Achse P drehbar mit dem beweglichen Element 140 verbunden und im UZS (nach hinten) vorgespannt, so dass eine hier nicht gezeigte die Kettenführung 90 s-förmig durchlaufende Kette gespannt wird. Die Kettenführungsanordnung 90 umfasst ein oberes und ein unteres Kettenführungsröllchen 91, 92, die jeweils zwischen zwei Käfighälften des Käfigs 93 drehbar gelagert sind. Die Drehachse des oberen Kettenführungsröllchen 91 ist von der P-Achse des beweglichen Elements 140 beabstandet. Das obere Kettenführungsröllchen 91 ist in einem kleineren Abstand von der P-Achse als das untere Kettenführungsröllchen 92 angeordnet. Je nach Schaltposition und Kettenspannung dreht sich die Kettenführungsanordnung 90 um die P-Achse. Damit verändert sich die Position der Kettenführungsröllchen 91, 92 relativ zum Ritzelpaket 4. Die Kettenführungsanordnung 90 ist gleichermaßen mit den übrigen Ausführungsformen kombinierbar.

Im zweiten Ausführungsbeispiel ist der elektromechanische Antrieb als motorbetriebenes Schneckengetriebe 150 ausgebildet. Die motorbetriebene Schnecke 151 ist am beweglichen Element 140 gelagert. Der Motor wird, wie im vorhergehenden Ausführungsbeispiel durch drahtlos übertragene Schaltsignale des Schalters 6 gesteuert und treibt die Schnecke 151 je nach Schaltsignal in die eine oder andere Drehrichtung an. Die elektronische Steuerung ist elektrisch mit dem Motor des elektromechanischen Antriebs verbunden und kann in bekannter Weise ausgebildet sein. Die Schnecke 151 wirkt mit dem Schneckenrad 152 am Schwenkmechanismus 130 zusammen. Das Schneckenrad 152 ist als Segmentrad, insbesondere als Viertelrad, am äußeren Schwenkarm 136 ausgebildet. Je nach Drehrichtung der Schnecke 151 bewegt sich der Schwenkmechanismus 130 und damit auch das bewegliche Element 140 samt Kettenführungsanordnung 90 entweder nach axial innen oder axial außen.

Eine in etwa mittig verlaufende Mittelebene des elektrischen Antriebs 150, welche sich von vorne nach hinten und von oben nach unten durch den Antrieb 150 erstreckt, verläuft in Relation zum Basiselement 120 zwischen dem inneren Arm 122a und dem äußeren Arm 122b des Basiselements 120. Außerdem verläuft die Mittelebene des elektrischen Antriebs 150 in Relation zum Schwenkmechanismus 130 zwischen dem ersten und zweiten Schwenkarm 135, 136 des Schwenkmechanismus 130.

Die Energiequelle 70 ist rückwärtig am Basiselement 120 angeordnet und versorgt den elektromechanischen Antrieb 150 mit Energie. Die Mittelebene ME70 der Batterie 70 verläuft, wie im vorhergehenden Ausführungsbeispiel, in axialer Richtung gesehen zwischen dem ersten und dem zweiten Arm 122a, 122b des Basiselements 120. Die Distanz zwischen der Energiequelle 70 und dem elektrischen Antrieb 150 kann mit einem elektrischen Kabel überbrückt werden. Alternativ könnte die Energiequelle auch in unmittelbarer Nähe des beweglichen Elements angeordnet sein und direkt mit dem elektromechanischen Antrieb verbunden werden.
Der im Bereich des beweglichen Elements angeordnet elektromechanische Antrieb könnte auch als mehrstufiges Getriebe mit einer Ausgangswelle ausgebildet sein - ähnlich wie im vorhergehenden Ausführungsbeispiel. Die Ausgangswelle wäre dann drehfest mit dem Schwenkmechanismus verbunden und würde diesen antreiben.

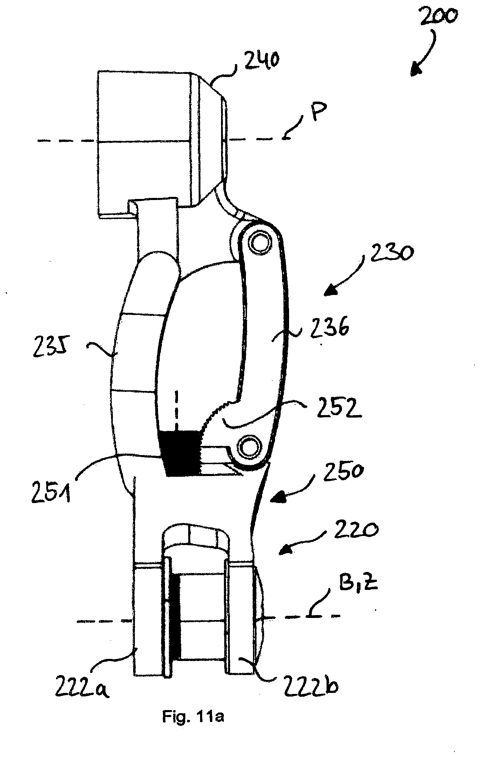

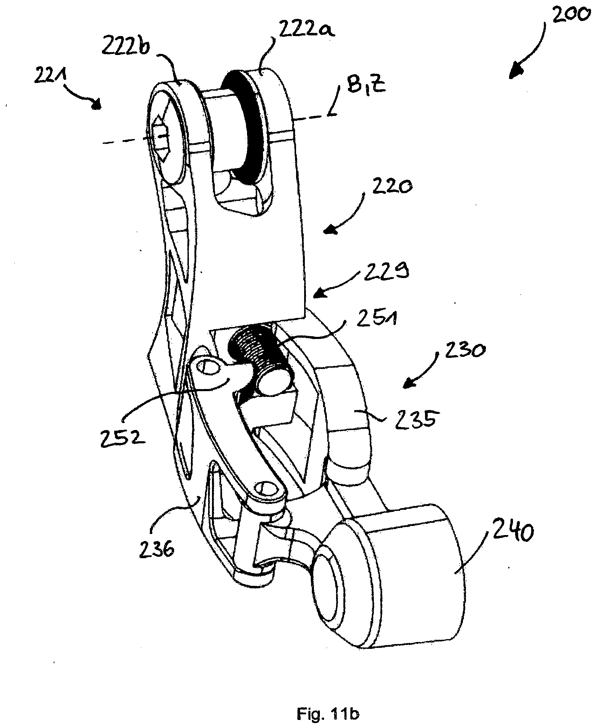

Die Figuren 10, 11a und 11b zeigen eine dritte Ausführungsform des elektromechanischen Schalterwerks 200. Der elektrische Antrieb 250 ist im Bereich des Basiselement 220 angeordnet. Insbesondere ist der Antrieb 250 zumindest teilweise in einem vom Basiselement 220 definierten Freiraum angeordnet und darin formschlüssig gehalten.

Die übrigen Teile des alternativen Schaltwerks 200 unterscheiden sich nur unwesentlich von der vorhergehenden Ausführungsform. Das Basiselement 220 weist an seinem ersten Anschlussende 221 zwei Arme 222a, b auf, welche zur Montage am Fahrradrahmen von einem Bolzen entlang der B-Achse bzw. Z-Achse durchgriffen werden und koaxial mit der Hinterradachse A verlaufen. Das Basiselement 220 weist an seinem zweiten Anschlussende 229 zwei Achsaufnahmen für die Schwenkachsen zur drehbaren Lagerung der Schwenkarme 235, 236 des Schwenkmechanismus 230 auf.

Im dritten Ausführungsbeispiel ist der elektromechanische Antrieb als motorbetriebenes Schneckengetriebe 250 ausgebildet. Die motorbetriebene Schnecke 251 ist im Basiselement 220 angeordnet und mit diesem verbunden. Der Motor wird, wie im vorhergehenden Ausführungsbeispiel durch drahtlos übertragene Schaltsignale des Schalters 6 gesteuert und treibt die Schnecke 251, je nach Schaltsignal in die eine oder andere Drehrichtung an. Die Schnecke 251 wirkt mit dem Schneckenrad 252 am Schwenkmechanismus 230 zusammen. Das Schneckenrad 252 ist als Segmentrad, insbesondere als Viertelrad, am äußeren Schwenkarm 236 ausgebildet. Je nach Drehrichtung der Schnecke 251 bewegt sich der Schwenkmechanismus 230 und damit auch das bewegliche Element 240 samt Kettenführungsanordnung 90 entweder nach axial innen oder axial außen. In den Figuren 11a und 11b ist die Kettenführungsanordnung nicht gezeigt.

Eine in etwa mittig verlaufende Mittelebene des elektromechanischen Antriebs 250, welche sich von vorne nach hinten und von oben nach unten durch den Antrieb 250 erstreckt, verläuft zwischen dem inneren Arm 222a und dem äußeren Arm 222b des Basiselements 220.

Auch die Energiequelle ist in bei dieser Ausführungsform nicht gezeigt. Die Energiequelle könnte aber genau wie in den vorhergehenden Ausführungsbeispielen rückwärtig am Basiselement angeordnet sein und den elektrischen Antrieb 250 mit Energie versorgen. Die Mitteleben der Batterie würde genau wie in vorherigen Ausführungsformen zwischen den Armen 222a, 222b des Basiselements 220 verlaufen. Die Batterie wäre im Verhältnis zum Rahmen mit dem Ausfallende fluchtend angeordnet.

Allgemein gesprochen ist der elektromechanische Antrieb 80, 150, 250 im Bereich zwischen dem Basiselement (B-Knuckle) 20, 120, 220 und dem beweglichen Element (P-Knuckle) 40, 140, 240 des Schaltwerks 10, 100, 200 angeordnet. Insbesondere ist der elektromechanische Antrieb 80, 150, 250 zwischen der B-Achse des Basiselements und der P-Achse des beweglichen Elements angeordnet.

Die Längsachse des Motors 81, 151, 251 des elektromechanischen Antriebs 80, 150, 250 erstreckt sich von hinten nach vorne durch den elektromechanischen Antrieb.

Die Längsachse des Motors 81, 151, 251 steht senkrecht zu den Längsachsen L1, L2 der Achsaufnahmen 29a, 29b des Basiselements 20, 120, 220. Die Längsachse des Motors 81, 151, 251 verläuft in axialer Richtung zwischen dem ersten und dem zweiten Arm 22a, 22b des Basiselements 20, 120, 220.

Vorteilhaft an der Ausgestaltung des Basiselements 20, 120, 220 mit einem ersten und zweiten Arm 22a, 22b ist, dass aufgrund der voneinander beabstandeten Lagerpunkten auf dem Adapter 60, das gesamte Schaltwerk 10, 100, 200 weniger anfällig ist bei Schlägen von außen gegenüber dem Ausfallende 2 zu verkippen. Diese Vorteile ergeben sich gleichermaßen für alle drei Ausführungsformen.

Die Anordnung des elektromechanischen Antriebs 80, 250 in einem Freiraum des Basiselement 20, 220 bietet zusätzlich Schutz. Das Basiselement 20, 220 umgibt den Anrieb 80, 250 käfigartig. Nach vorne über das Basiselement 20, 220 hinausragende Teile des elektrischen Antriebs 80, 150 sind vom Schwenkmechanismus 30, 230 umgeben. Diese Vorteile ergeben sich gleichermaßen für die erste Ausführungsform (Figur 2 bis 7) und dritte Ausführungsform (Figur 10 und 11).

Die Anordnung des elektromechanischen Antriebs 150 in einem Freiraum des beweglichen Elements 140 bietet ebenfalls Schutz. Das bewegliche Element 140 umgibt den Anrieb 140. Über das bewegliche Element 140 hinausragende Teile des elektrischen Antriebs 140 sind vom Schwenkmechanismus 130 umgeben (Figuren 8 und 9).

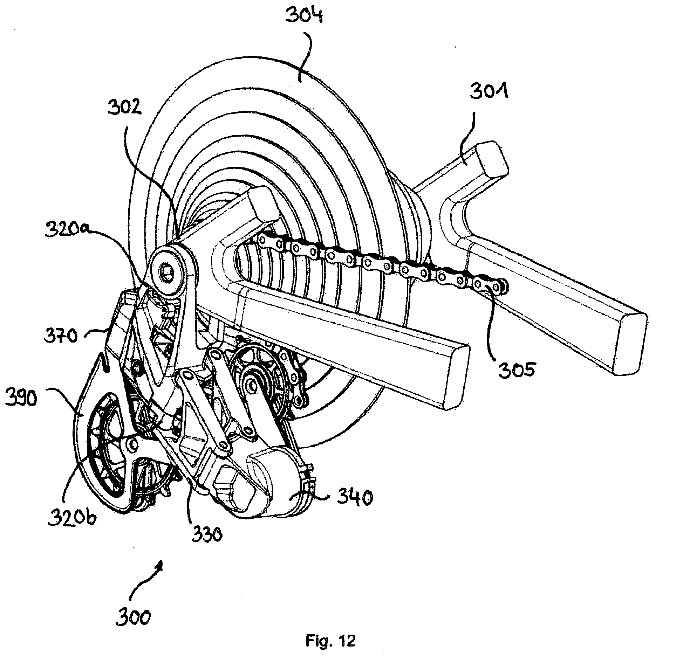

Die Figuren 12 bis 19 zeigen weitere Ausführungsformen von elektromechanischen Schaltwerken 300, 400, 500 und 600 zur koaxialen Montage mit der Hinterradachse A. Bei diesen Ausführungsformen ist der elektromechanische Antrieb, ähnlich wie im ersten Ausführungsbeispiel (Figuren 2 bis 7), im Bereich des Basiselements angeordnet. Insbesondere ist der Antrieb zumindest teilweise in einem vom Basiselement definierten Freiraum angeordnet und am Basiselement festgelegt. Die Schaltwerke 300, 400, 500, 600 gleichen in weiten Teilen der ersten Ausführungsform. Um Wiederholungen zu vermeiden, wird im Folgenden in erster Linie auf die Unterschiede zwischen den Ausführungsformen eingegangen.

Figur 12 zeigt eine perspektivische Außenansicht der vierten Ausführungsform des elektromechanischen Schaltwerks 300 am rechten Ausfallende 302 des Rahmens 301 montiert. Die koaxiale Montage mittels Bolzen entlang der Hinterradachse A bzw. der B-Achse entspricht den vorherigen Ausführungsbeispielen. Das Ritzelpaket 304 ist schematisch dargestellt und dreht sich um die Hinterradachse A. Ein solches Ritzelpaket 304 kann beispielsweise 12 Ritzel umfassen, wobei das kleinste Ritzel zehn Zähne und das größte Ritzel 52 Zähne aufweist. Die Kette 305 durchläuft die Kettenführungsanordnung 390 s-förmig und steht mit den Zähnen des oberen und unteren Kettenführungsröllchens sowie den hier nicht gezeigten Zähnen des Ritzelpakets 304 in Eingriff.

Das Schaltwerk 300 umfasst ein zweiteiliges Basiselement 320a, 320b, ein bewegliches Element 340, eine Kettenführungsanordnung 390 und einen Schwenkmechanismus 330, der das Basiselement 320 mit dem beweglichen Element 340 verbindet. Der elektromechanische Antrieb zum Antreiben des Schwenkmechanismus 330 ist im Getriebegehäuse 350 aufgenommen und wird vom Basiselement 320 gehalten. Die Energiequelle 370 ist hinten am Basiselement 320 angebracht. Die Schwenkachsen entsprechen den vorherigen Ausführungen.

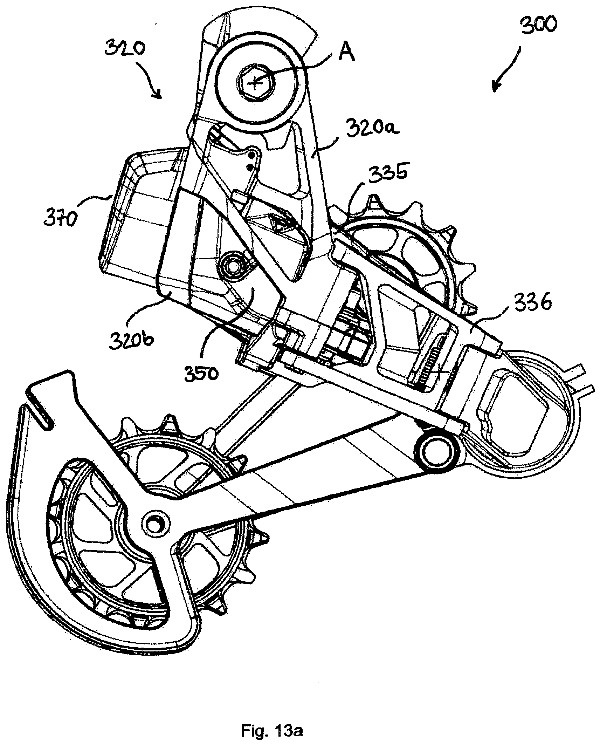

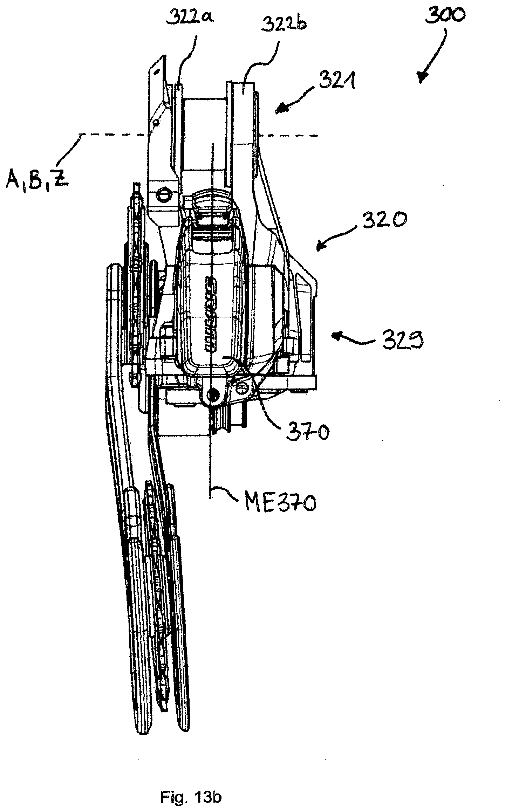

Figuren 13a und 13b zeigen das nicht am Rahmen montierte Schaltwerk 300 aus der Figur 12 einmal in der Außenansicht und einmal in der Rückansicht. Genau wie die erste Ausführungsform weist das Basiselement 320 an seinem ersten Anschlussende 321 zwei Arme 322a, 322b auf, welche zur Montage an der Hinterradachse A von einem Bolzen entlang der B-Achse bzw. Z-Achse durchgriffen werden. Das Basiselement 320 weist an seinem zweiten Anschlussende 329 zwei Achsaufnahmen für die Schwenkachsen 31, 32 zur drehbaren Lagerung der Schwenkarme 335, 336 des Schwenkmechanismus 330 auf. Die Längsachsen L1, L2 der Achsaufnahmen verlaufen im Wesentlichen parallel zu den Ritzelebenen bzw. schneiden die Hinterradachse A im rechten Winkel.

Das Basiselement 320 ist zweiteilig ausgebildet. Das Basiselement 320 umfasst ein erstes Basisteilelement 320a und ein zweites Basisteilelement 320b. Das erste Basisteilelement 320a ist zur koaxialen Montage an der Hinterradachse A ausgebildet. Das zweite Basisteilelement 320b ist zur Montage an dem ersten Basisteilelement 320a ausgebildet. Insbesondere werden das erste und zweite Basisteilelement 320a, 320b miteinander verschraubt.

Das erste Basisteilelement 320a umfasst das erste Anschlussende 321 mit den zwei Armen 322a, 322b und den beiden Zentrieröffnungen. Das erste Basisteilelement 320a umfasst auch das zweite Anschlussende 329 mit den beiden Achsaufnahmen für die erste und zweite Schwenkachse 31, 32. Das zweite Basisteilelement 320b kann ebenfalls Achsaufnahmen für die Schwenkachsen 31, 32 aufweisen. Bei dieser Ausführungsform durchgreifen die Schwenkachsen 31, 32 sowohl die Achsaufnahmen des ersten Basisteilelements 320a als auch die Achsaufnahmen des zweiten Basisteilelements 320b.

Unabhängig davon, ob das Basiselement 320 ein- oder mehrteilig ausgebildet ist, ist die Position der Zentrieröffnungen in den Armen 322a, 322b am ersten Anschlussende 321 und die Position der Achsaufnahmen am zweiten Anschlussende 329 relativ zueinander unveränderlich. Das erste Anschlussende 321 ist koaxial mit der Hinterradachse A montierbar und das zweite Anschlussende 329 dient der Kopplung mit dem Schwenkmechanismus. Das heißt die Z-Achse der Zentrieröffnung und die Längsachsen L1, L2 der Achsaufnahmen für die Schwenkachsen 31, 32 sind zueinander unveränderlich. Mit anderen Worten sind sie relativ zueinander starr ausgebildet. Anders als im Stand der Technik gibt es keine Gelenkverbindung zwischen einem Schaltauge, welches zur Montage an der Hinterradachse A ausgebildet ist und dem Basiselement (B-Knuckle), welches die Achsaufnahmen für den Schwenkmechanismus umfasst.

Der Gehäusefreiraum zur Aufnahme des Getriebegehäuses 350 mit dem elektromechanischen Antrieb ist zwischen dem ersten und zweiten Basisteilelement 320a, 320b definiert. Die zweiteilige Ausbildung des Basiselements 320 erleichtert das Einsetzen des Getriebegehäuses 350.

Figur 13b zeigt eine Rückansicht des Schaltwerks 300 aus der Figur 13a. Hier wird die Positionierung der Energiequelle 370 relativ zu dem ersten und zweiten Arm 322a, 322b des Basiselements 320 deutlich. Im Vergleich zur Ausführung in Figur 2d ist die Batterie 370 axial etwas weiter außen angeordnet. Das heißt, eine gedachte Mittelebene ME370 der Batterie 370 ist relativ zu einer hier nicht gezeigten Mittelebene des Ausfallendes in axialer Richtung leicht nach außen versetzt. Weiterhin gilt, dass die Mittelebene der Batterie ME370 zwischen dem ersten Arm 322a und dem zweiten Arm 322b des Basiselements 320 verläuft. Außerdem liegt die Mittelebene der Energiequelle ME370 im am Fahrradrahmen 301 montierten Zustand in etwa in einer Ebene mit dem rechten Ausfallenende 302 (vgl. Figur 12).

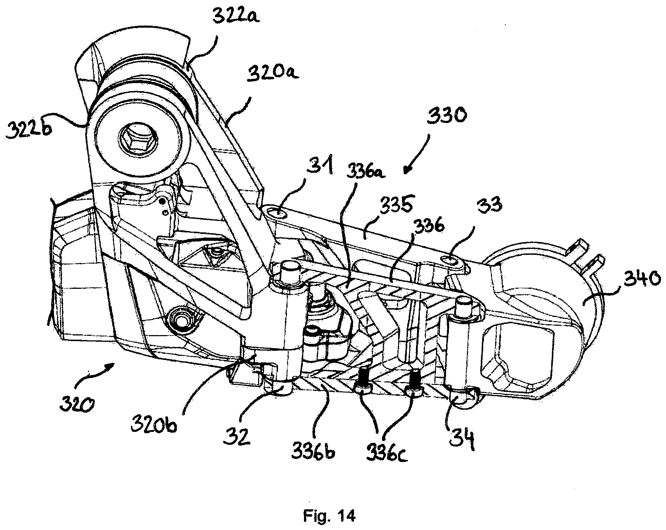

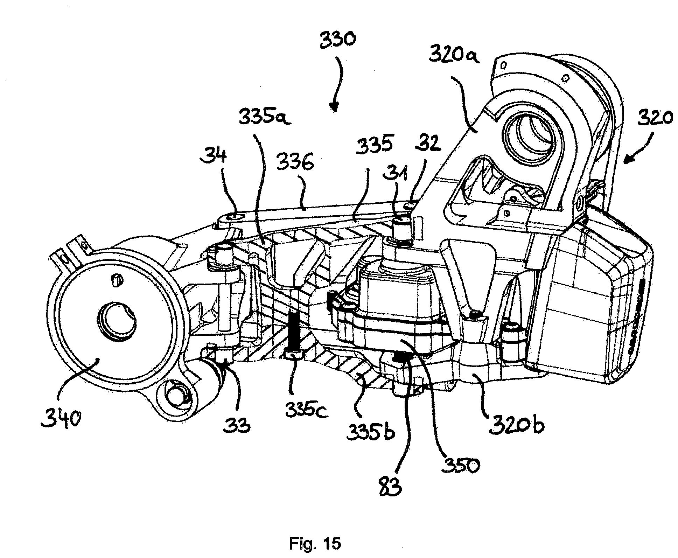

Figuren 14 und 15 zeigen jeweils einen perspektivischen Teilschnitt durch eine Unterbaugruppe (ohne Kettenführungsanordnung) eines Schaltwerks 300. Der Schwenkmechanismus 330 umfasst einen inneren Schwenkarm 335 und einen äußeren Schwenkarm 336. Der innere Schwenkarm 335 ist über eine erste Schwenkachse 31 und der äußere Schwenkarm 336 über eine zweite Schwenkachse 32 gelenkig mit dem Basiselement 320 verbunden. Die Schwenkachsen 31, 32 durchgreifen dazu die Achsaufnahmen in den ersten und zweiten Basisteilelementen 320a, 320b.

In Figur 14 ist der äußere Schwenkarm 336 teilweise geschnitten dargestellt. Der äußere Schwenkarm 336 ist zweiteilig ausgeführt. Der Schwenkarm 336 umfasst einen oberen ersten Teil 336a und einen unteren zweiten Teil 336b. Die beiden Teile 336a, 336b des Schwenkarms 336 sind mit zwei Schrauben 336c lösbar verbunden. Im äußeren Schwenkarm 336 sind die zweite und die vierte Schwenkachse 32, 34 des Schwenkmechanismus 330 gelagert. Die Schwenkachsen 32, 34 sind jeweils mit dem einen Ende im ersten Teil 336a und mit dem anderen Ende im zweiten Teil 336b des äußeren Schwenkarms 336 gelagert.

In Figur 15 ist der innere Schwenkarm 335 teilweise geschnitten dargestellt. Der Schwenkarm 335 ist zweiteilig ausgeführt. Der Schwenkarm 335 umfasst einen oberen ersten Teil 335a und einen unteren zweiten Teil 335b. Die beiden Teile 335a, 335b des inneren Schwenkarms 335 sind mit einer Schraube 335c lösbar verbunden.
Im inneren Schwenkarm 335 sind die erste und dritte Schwenkachse 31, 33 gelagert. Die Schwenkachsen 31, 33 sind jeweils mit ihrem einen Ende im ersten Teil 335a und mit ihrem anderen Ende im zweiten Teil 335b des Schwenkarms 335 gelagert.

Vorteilhaft gegenüber einer einteiligen Ausbildung der Schwenkarme ist, dass aufgrund der zweiteiligen Ausgestaltung die Schwenkachsen nicht mehr von einer Seite eingeschoben werden müssen. Damit sind keine Durchgangsbohrungen in den Schwenkarmen nötig. Das erste und das zweite Teil eines Schwenkarms kann auf die Enden der Schwenkachse gesetzt werden. Einseitige Öffnungen im Schwenkarm z. B. in Form eines Sackloches oder einer einseitig geschlossenen Zylinderbuchse sind ausreichend, um die Enden der Schwenkachsen aufzunehmen. Dies erleichtert den Zusammenbau und reduziert das Eindringen von Schmutz und Feuchtigkeit. Aus der Figur 15 geht hervor, dass die Schwenkachse 33 in der Mitte einen kleineren Durchmesser als an ihren Enden aufweist. Die Schwenkachse 33 ist mit ihren Enden in einseitig geschlossene Zylinderbuchsen eingesteckt, welche die Durchgangsbohrungen im Schwenkarm 335 einseitig verschließen. Alternativ könnte der Schwenkarm Sacklöcher aufweisen, in welcher die Schwenkachse gelagert ist.

Der innere und/oder äußere Schwenkarm kann einteilig oder mehrteilig ausgebildet sein. Mehrteilige Schwenkarme können zwei oder mehrere Teile aufweisen. Die Teilung kann an unterschiedlichen Positionen geschehen. Die lösbare Verbindung der Teile kann durch eine oder mehrere Schrauben oder vergleichbare Mittel erfolgen.

Die Schwenkarme 335, 365 weisen Aussparungen auf, welche eine Kollision mit dem Getriebegehäuse 350 beim Verschwenken des Schwenkmechanismus 330 verhindern. Das Getriebegehäuse 350 ragt zumindest in verschwenktem Zustand der Schwenkarme 335, 336 in eine gedachte, vertikal verlaufende Mittelebene des inneren und/oder äußeren Schwenkarms 335, 336 hinein. Die Erläuterungen zu den Schwenkarmen sind für die folgenden Ausführungsformen gleichermaßen anwendbar.

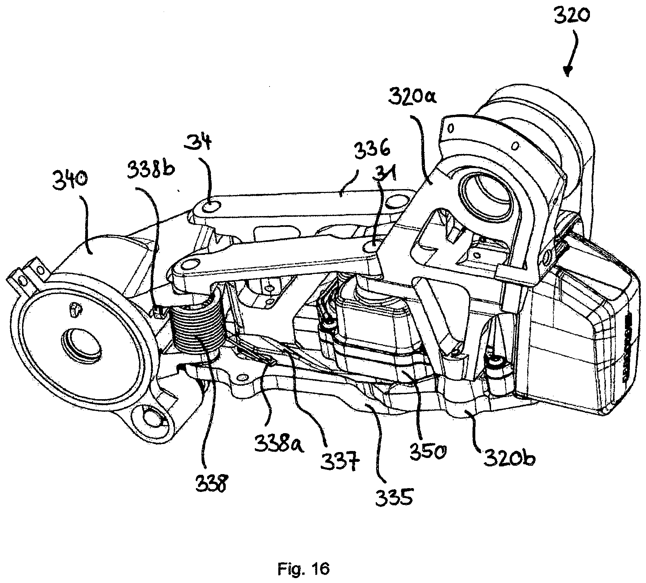

Figur 16 zeigt eine perspektivische Innenansicht einer Unterbaugruppe eines Schaltwerks 300. Im Vergleich zu Figur 15 werden hier weitere Teile sichtbar. Das Schaltwerk 300 ist mittels der Feder 338 nach innen (zum Rahmen hin) vorgespannt. Dazu stützt sich ein erster Federarm 338a am Antriebsarm 337 und ein zweiter Federarm 338b am beweglichen Element 340 ab. Der Antriebsarm 337 ist an einem Ende mit der Ausgangswelle 83 des elektromechanischen Antriebs im Getriebegehäuse 350 drehmomentübertragend verbunden (vgl. Figur 7 und 15). Die Ausgangswelle 83 verläuft koaxial mit der ersten Schwenkachse 31. Das andere Ende des Antriebsarms 337 liegt an der Innenseite des inneren Schwenkarms 335 an. In eine erste Schaltrichtung, drückt der Antriebsarm 337 nach außen gegen den inneren Schwenkarm 335 und bewegt den Schwenkmechanismus 330 entgegen der Federvorspannung nach außen. Der Antriebsarm 337 wird um die geometrische Achse L1 der ersten Schwenkachse 31 nach außen gedreht und die Kette wird auf ein kleineres Ritzel bewegt. In eine zweite entgegengesetzte Schaltrichtung bewegt sich der Antriebsarm 337 nach innen vom inneren Schwenkarm 335 weg, so dass sich der Schwenkmechanismus 330 mit der Federvorspannung nach innen bewegt. Der Antriebsarm 337 wird um die Achse L1 nach innen gedreht und die Kette wird auf ein größeres Ritzel bewegt.

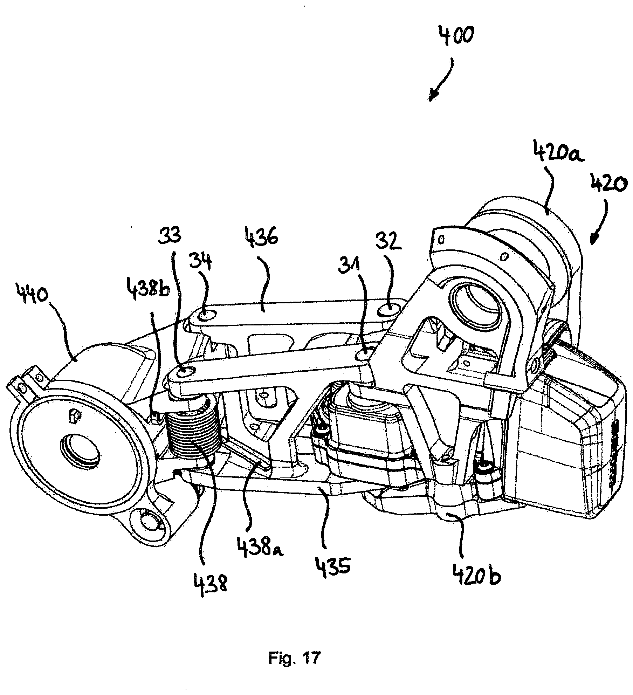

Figur 17 zeigt eine perspektivische Innenansicht einer Unterbaugruppe eines Schaltwerks 400 der fünften Ausführungsform. Das Schaltwerk 400 ist ebenfalls mittels der Feder 438 nach innen vorgespannt. Dazu stützt sich ein erster Federarm 438a am inneren Schwenkarm 435 und ein zweiter Federarm 438b am beweglichen Element 440 ab. Anders als im vorhergehenden Ausführungsbeispiel wird hier kein zusätzlicher Antriebsarm benötigt. Der erste Federarm 438a stützt sich direkt am inneren Schwenkarm 435 ab. Der innere Schwenkarm 435 ist direkt mit der Ausgangswelle des elektromechanischen Antriebs drehmomentübertragend verbunden. Gleichzeitig dient die Ausgangwelle als untere Schwenkachse, welche den inneren Schwenkarm 435 mit dem unteren Basisteilelement 420b des Basiselements 420 drehbar verbindet. Dazu ist die Ausgangswelle drehbar in der zweiten Achsaufnahme am unteren Basisteilelement 420b gelagert. Je nach Schaltrichtung wird der innere Schwenkarm 435 entgegen der Federvorspannung nach außen oder mit der Federvorspannung nach innen bewegt.

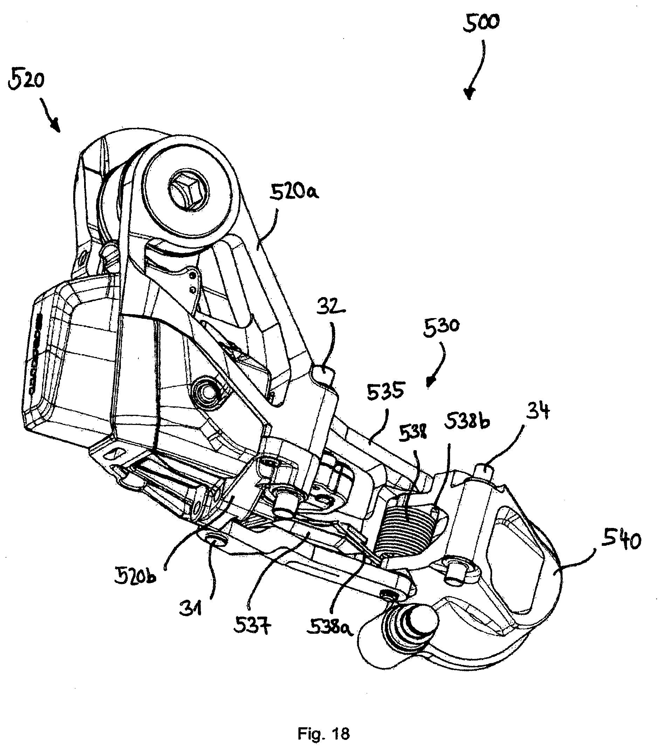

Figur 18 zeigt eine perspektivische Außenansicht einer Unterbaugruppe eines Schaltwerks 500 der sechsten Ausführungsform. Zur besseren Sichtbarkeit ist der äußere Schwenkarm nicht dargestellt. Das Schaltwerk 500 ist anders als die vorhergehenden Ausführungsbeispiele mittels der Feder 538 nach außen (vom Rahmen weg) vorgespannt. Dazu stützt sich ein erster Federarm 538a am Antriebsarm 537 und ein zweiter Federarm 538b am beweglichen Element 540 ab. Der Antriebsarm 537 ist an einem Ende mit der Ausgangswelle des elektromechanischen Antriebs drehmomentübertragend verbunden. Das andere Ende des Antriebsarms 537 liegt an der Außenseite des inneren Schwenkarms 535 an. In eine erste Schaltrichtung drückt der Antriebsarm 537 nach innen gegen den inneren Schwenkarm 535 und bewegt den Schwenkmechanismus 530 entgegen der Federvorspannung nach innen. Der Antriebsarm 537 wird nach innen um die Schwenkachse 31 gedreht und die Kette wird auf ein größeres Ritzel bewegt. In eine zweite entgegengesetzte Schaltrichtung bewegt sich der Antriebsarm 537 nach außen vom inneren Schwenkarm 535 weg, so dass sich der Schwenkmechanismus 530 mit der Federvorspannung nach außen bewegt. Der Antriebsarm 537 wird um die Schwenkachse 31 nach außen gedreht und die Kette wird auf ein kleineres Ritzel bewegt.

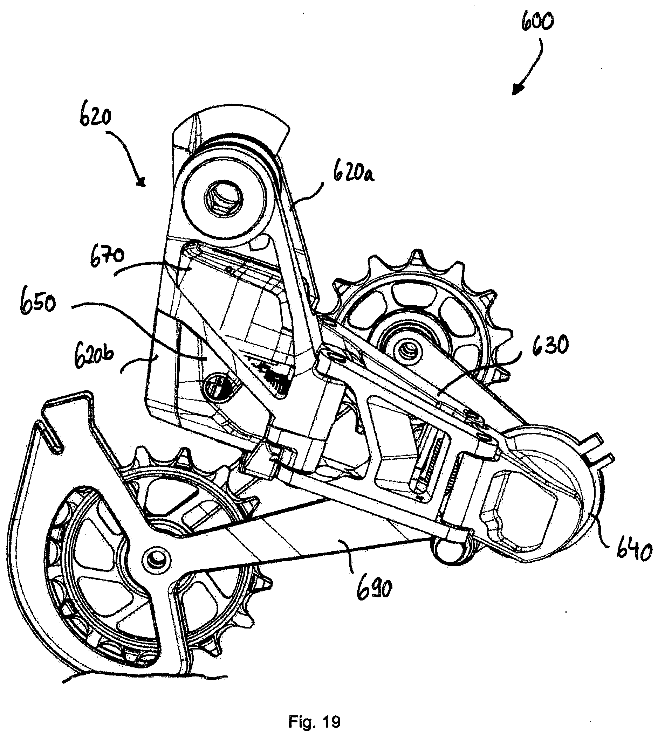

Figur 19 zeigt eine perspektivische Außenansicht eines elektromechanischen Schaltwerks 600 der siebten Ausführungsform mit einem Basiselement 620, einem Schwenkmechanismus 630, einem beweglichen Element 640 und einer Kettenführungsanordnung 690. Anders als bei den vorhergehenden Ausführungsbeispielen ist hier die Batterie nicht hinten am Basiselement angeordnet. Die Batterie 670 ist innerhalb des Basiselements 620 angeordnet. Das Basiselement 620 definiert einen Freiraum, der groß genug ist, um das Getriebegehäuse 650 und die Energiequelle 670 aufzunehmen. Das Basiselement 620 ist zweiteilig ausgebildet und besteht aus einem ersten Basisteilelement 620a und einem zweiten Basisteilelement 620b. Die Batterie 670 wird direkt mit dem Getriebegehäuse 650 lösbar verbunden. Insbesondere kann die Batterie 670 auf der Oberseite des Getriebegehäuses 650 beispielsweise durch Verrasten angebracht werden. Vorteilhaft bei dieser Ausgestaltung ist, dass die Batterie 670 vom Basiselement 620 umgeben und damit vor Einwirkung von außen geschützt ist.

## Patentansprüche

1. Elektromechanisches Schaltwerk (10, 200) zur koaxialen Montage an einer Hinterradachse (A) eines Fahrrads aufweisend:
- ein Basiselement (20, 220) zur lösbaren Montage an einem Fahrradrahmen (1),
- ein bewegliches Element (40, 240),
- eine Kettenführungsanordnung (90), die um eine Drehachse P drehbar mit dem beweglichen Element (40, 240) verbunden ist,
- einen Schwenkmechanismus (30, 230), der das Basiselement (20, 120, 220) mit dem beweglichen Element (40, 240) derart verbindet, dass das bewegliche Element (40, 140, 240) relativ zum Basiselement (20, 220) beweglich ist, und
- einen elektromechanischen Antrieb (80, 250) zum Antreiben des Schwenkmechanismus (30, 230),
wobei das Basiselement (20, 220) ein erstes Anschlussende (21, 221) zur koaxialen Montage an der Hinterradachse (A) und ein zweites Anschlussende (29, 229) zur Kopplung mit dem Schwenkmechanismus (30) umfasst,
wobei das erste Anschlussende (21) des Basiselements (20) einen ersten Arm (22a) und einen zweiten Arm (22b) aufweist, die in axialer Richtung voneinander beabstandet angeordnet sind, und der erste Arm (22a) eine erste Zentrieröffnung (23a) und der zweite Arm (22b) eine zweite Zentrieröffnung (23b) aufweist,
**dadurch gekennzeichnet, dass**
der elektromechanische Antrieb (80, 250) in einem Getriebegehäuse (50) aufgenommen ist, und das Basiselement (20, 220) einen Gehäusefreiraum definiert, in dem das Getriebegehäuse (50) zumindest teilweise angeordnet ist,
wobei das Basiselement mehrteilig ausgebildet ist, und zumindest ein erstes Basisteilelement zur Montage an einem Fahrradrahmen und ein zweites Basisteilelement zur Montage an dem ersten Basisteilelement umfasst, und der Gehäusefreiraum zwischen dem ersten Basisteilelement und dem zweiten Basisteilelement definiert ist,
wobei das erste Basisteilelement das erste Anschlussende des Basiselements mit dem ersten Arm und dem zweiten Arm umfasst.

2. Elektromechanisches Schaltwerk (10, 200) nach einem der vorhergehenden Ansprüche, wobei sich im montierten Zustand der erste Arm (22a) auf einer axialen Innenseite des Rahmens (1) und der zweite Arm (22b) auf einer axialen Außenseite des Rahmens (1) befindet.

3. Elektromechanisches Schaltwerk (10, 200) nach einem der vorhergehenden Ansprüche, wobei das zweite Anschlussende (29) des Basiselements (20) eine erste Achsaufnahme (29a) für eine erste Schwenkachse (31) des Schwenkmechanismus (30) und eine zweite Achsaufnahme (29a) für eine zweite Schwenkachse (32) des Schwenkmechanismus (30) aufweist.

4. Elektromechanisches Schaltwerk (10, 200) nach dem vorhergehenden Anspruch, wobei die erste Achsaufnahme (29a) und die zweite Achsaufnahme (29b) jeweils im Wesentlichen orthogonal zur Hinterradachse (A) orientiert sind.

5. Elektromechanisches Schaltwerk nach Anspruch 3, wobei die erste und zweite Achsaufnahme jeweils schräg zur Hinterradachse (A) orientiert sind.

6. Elektromechanisches Schaltwerk (10, 200) nach einem der vorhergehenden Ansprüche, aufweisend einen Adapter (60) zur Verbindung des Basiselements (20, 120, 220) mit dem Rahmen (1), welcher eine Schraubverbindung, insbesondere einen Bolzen (61) mit einem Außengewinde (64) und eine Mutter (66) mit einem Innengewinde (67) umfasst.

7. Elektromechanisches Schaltwerk (10, 200) nach einem der vorhergehenden Ansprüche, wobei der elektromechanische Antrieb (80, 250) im Bereich des Basiselements (20, 220) angeordnet ist.

8. Elektromechanisches Schaltwerk (200) nach dem vorhergehenden Anspruch,
wobei der elektromechanische Antrieb als Schneckengetriebe (250) ausgebildet ist, und dessen motorbetriebene Schnecke (251) zumindest teilweise im Bereich des Basiselements (220) angeordnet ist und mit einem Schneckenrad (252) am Schwenkmechanismus (230) zusammenwirkt.

9. Elektromechanisches Schaltwerk (10, 200) nach einem der vorhergehenden Ansprüche, aufweisend eine Energiequelle (70), deren Mittelebende (ME70) zwischen dem ersten Arm (22a) und dem zweiten Arm (22b) des Basiselements (20) verläuft, und die Mittelebende (ME70) der Energiequelle (70) im am Fahrradrahmen (1) montierten Zustand in etwa in einer Ebene mit einem rechten Ausfallenende (2) liegt.

10. Elektromechanisches Schaltwerk (10, 200) nach einem der vorhergehenden Ansprüche, wobei der elektromechanische Antrieb (80, 250), insbesondere das Getriebegehäuse (50), eine elektrische Schnittstelle zu einer Energiequelle (70) aufweist.

11. Elektromechanisches Schaltwerk (10, 200) nach einem der vorhergehenden Ansprüche, wobei das Basiselement (20, 220) derart ausgebildet ist, dass eine Energiequelle (70) so an dem Basiselement (20, 220) zu befestigen ist, dass die Energiequelle (70) mit dem elektromechanischen Antrieb (80, 250) elektrisch verbunden ist.

## Claims

1. Electromechanical gearshift mechanism (10, 200) for coaxial mounting on a rear-wheel axle (A) of a bicycle, having:
- a base element (20, 220) for releasable mounting on a bicycle frame (1),
- a movable element (40, 240),
- a chain-guiding arrangement (90) which is connected to the movable element (40, 240) in a manner rotatable about a rotary axle P,
- a pivot mechanism (30, 230) which connects the base element (20, 120, 220) to the movable element (40, 240) in such a way that the movable element (40, 140, 240) is movable relative to the base element (20, 220), and
- an electromechanical drive (80, 250) for driving the pivot mechanism (30, 230),
wherein the base element (20, 220) comprises a first attachment end (21, 221) for coaxial mounting on the rear-wheel axle (A), and a second attachment end (29, 229) for coupling to the pivot mechanism (30), wherein the first attachment end (21) of the base element (20) has a first arm (22a) and a second arm (22b), which are arranged spaced apart from one another in an axial direction, and the first arm (22a) has a first centring opening (23a) and the second arm (22b) has a second centring opening (23b),
**characterized in that**
the electromechanical drive (80, 250) is accommodated in a transmission housing (50), and the base element (20, 220) defines a housing free space in which the transmission housing (50) is at least partially arranged,
wherein the base element is of multi-part form and comprises at least a first base sub-element for mounting on a bicycle frame and a second base sub-element for mounting on the first base sub-element, and the housing free space is defined between the first base sub-element and the second base sub-element,
wherein the first base sub-element comprises the first attachment end of the base element, which has the first arm and the second arm.

2. Electromechanical gearshift mechanism (10, 200) according to one of the preceding claims, wherein, in the mounted state, the first arm (22a) is situated on an axial inner side of the frame (1) and the second arm (22b) is situated on an axial outer side of the frame (1).

3. Electromechanical gearshift mechanism (10, 200) according to either of the preceding claims, wherein the second attachment end (29) of the base element (20) has a first axle receptacle (29a) for a first pivot axle (31) of the pivot mechanism (30) and a second axle receptacle (29a) for a second pivot axle (32) of the pivot mechanism (30).

4. Electromechanical gearshift mechanism (10, 200) according to the preceding claim, wherein the first axle receptacle (29a) and the second axle receptacle (29b) are each oriented substantially orthogonally to the rear-wheel axle (A).

5. Electromechanical gearshift mechanism according to Claim 3, wherein the first and second axle receptacles are each oriented obliquely to the rear-wheel axle (A).

6. Electromechanical gearshift mechanism (10, 200) according to one of the preceding claims, having an adaptor (60) for connection of the base element (20, 120, 220) to the frame (1), which adaptor comprises a screw connection, in particular a bolt (61) with an external thread (64) and a nut (66) with an internal thread (67).

7. Electromechanical gearshift mechanism (10, 200) according to one of the preceding claims, wherein the electromechanical drive (80, 250) is arranged in the region of the base element (20, 220).

8. Electromechanical gearshift mechanism (200) according to the preceding claim, wherein the electromechanical drive is in the form of a wormgear transmission (250), and the motor-operated worm (251) thereof is arranged at least partially in the region of the base element (220) and interacts with a worm wheel (252) on the pivot mechanism (230).

9. Electromechanical gearshift mechanism (10, 200) according to one of the preceding claims, having an energy source (70) whose central plane (ME70) extends between the first arm (22a) and the second arm (22b) of the base element (20), and the central plane (ME70) of the energy source (70) is situated, in the state mounted on the bicycle frame (1), approximately in a plane with a right-hand dropout (2) .

10. Electromechanical gearshift mechanism (10, 200) according to one of the preceding claims, wherein the electromechanical drive (80, 250), in particular the transmission housing (50), has an electrical interface with respect to an energy source (70).

11. Electromechanical gearshift mechanism (10, 200) according to one of the preceding claims, wherein the base element (20, 220) is designed in such a way that an energy source (70) can be fastened to the base element (20, 220) in such a way that the energy source (70) is electrically connected to the electromechanical drive (80, 250).

## Revendications

1. Dérailleur électromécanique (10, 200) destiné au montage coaxial sur un axe de roue arrière (A) d'une bicyclette, présentant :
- un élément de base (20, 220) destiné au montage libérable sur un cadre de bicyclette (1),
- un élément mobile (40, 240),
- un ensemble de guidage de chaîne (90) qui est relié à l'élément mobile (40, 240) de manière rotative autour d'un axe de rotation P,
- un mécanisme de pivotement (30, 230) qui relie l'élément de base (20, 120, 220) à l'élément mobile (40, 240) de telle sorte que l'élément mobile (40, 140, 240) est mobile par rapport à l'élément de base (20, 220), et
- un entraînement électromécanique (80, 250) destiné à l'entraînement du mécanisme de pivotement (30, 230), l'élément de base (20, 220) comprenant une première extrémité de raccordement (21, 221) pour le montage coaxial sur l'axe de roue arrière (A) et une deuxième extrémité de raccordement (29, 229) pour l'accouplement au mécanisme de pivotement (30),
la première extrémité de raccordement (21) de l'élément de base (20) présentant un premier bras (22a) et un deuxième bras (22b) qui sont disposés de manière espacée l'un de l'autre dans la direction axiale, et le premier bras (22a) présentant une première ouverture de centrage (23a) et le deuxième bras (22b) présentant une deuxième ouverture de centrage (23b),
**caractérisé en ce que**
l'entraînement électromécanique (80, 250) est logé dans un boîtier de transmission (50), et l'élément de base (20, 220) définit un espace libre de boîtier, dans lequel le boîtier de transmission (50) est disposé au moins partiellement,
l'élément de base étant réalisé en plusieurs parties, et comprenant au moins un premier élément partiel de base destiné au montage sur un cadre de bicyclette et un deuxième élément partiel de base destiné au montage sur le premier élément partiel de base, et l'espace libre de boîtier étant défini entre le premier élément partiel de base et le deuxième élément partiel de base,
le premier élément partiel de base comprenant la première extrémité de raccordement de l'élément de base comportant le premier bras et le deuxième bras.

2. Dérailleur électromécanique (10, 200) selon l'une des revendications précédentes, le premier bras (22a) se trouvant sur un côté intérieur axial du cadre (1) et le deuxième bras (22b) se trouvant sur un côté extérieur axial du cadre (1) dans l'état monté.

3. Dérailleur électromécanique (10, 200) selon l'une des revendications précédentes, la deuxième extrémité de raccordement (29) de l'élément de base (20) présentant un premier logement d'axe (29a) pour un premier axe de pivotement (31) du mécanisme de pivotement (30) et un deuxième logement d'axe (29a) pour un deuxième axe de pivotement (32) du mécanisme de pivotement (30).

4. Dérailleur électromécanique (10, 200) selon l'une des revendications précédentes, le premier logement d'axe (29a) et le deuxième logement d'axe (29b) étant orientés respectivement sensiblement perpendiculairement à l'axe de roue arrière (A).

5. Dérailleur électromécanique selon la revendication 3, le premier et le deuxième logement d'axe étant orientés respectivement de manière oblique par rapport à l'axe de roue arrière (A).

6. Dérailleur électromécanique (10, 200) selon l'une des revendications précédentes, présentant un adaptateur (60) servant à la liaison de l'élément de base (20, 120, 220) au cadre (1), lequel adaptateur comprend une liaison par vissage, en particulier un boulon (61) doté d'un filetage extérieur (64) et un écrou (66) doté d'un filetage intérieur (67).

7. Dérailleur électromécanique (10, 200) selon l'une des revendications précédentes,
l'entraînement électromécanique (80, 250) étant disposé dans la région de l'élément de base (20, 220).

8. Dérailleur électromécanique (200) selon la revendication précédente,
l'entraînement électromécanique étant réalisé sous forme de transmission à vis sans fin (250), et sa vis sans fin (251) entraînée par moteur étant disposée au moins partiellement dans la région de l'élément de base (220) et coopérant avec un pignon hélicoïdal (252) sur le mécanisme de pivotement (230).

9. Dérailleur électromécanique (10, 200) selon l'une des revendications précédentes,
présentant une source d'énergie (70), dont le plan médian (ME70) s'étend entre le premier bras (22a) et le deuxième bras (22b) de l'élément de base (20), et le plan médian (ME70) de la source d'énergie (70) se situant approximativement dans un plan comportant une patte droite (2) dans l'état monté sur le cadre de bicyclette (1) .

10. Dérailleur électromécanique (10, 200) selon l'une des revendications précédentes, l'entraînement électromécanique (80, 250), en particulier le boîtier de transmission (50), présentant une interface électrique vers une source d'énergie (70).

11. Dérailleur électromécanique (10, 200) selon l'une des revendications précédentes, l'élément de base (20, 220) étant réalisé de telle sorte qu'une source d'énergie (70) doit être fixée à l'élément de base (20, 220) de telle sorte que la source d'énergie (70) soit connectée électriquement à l'entraînement électromécanique (80, 250) .
